# EUROPEAN PATENT APPLICATION

(11) **EP 4 586 422 A1**
(43) Date of publication of application: **16.07.2025**
(21) Application number: 23863282.2
(22) Date of filing: 08.09.2023
(51) Int. Cl.: H02G 1/12, B23K 26/00, B23K 26/082, B23K 26/351, B23K 26/36

(54) **FILM REMOVAL METHOD AND FILM REMOVAL DEVICE**

(30) Priority: 08.09.2022 JP 2022143235; 19.05.2023 JP 2023083354
(71) Applicant: FURUKAWA ELECTRIC CO., LTD., Tokyo 100-8322 (JP)
(72) Inventor: MATSUMOTO, Ryoya, Tokyo 100-8322 (JP); SUGA, Sayo, Tokyo 100-8322 (JP); SHIGEMATSU, Takashi, Tokyo 100-8322 (JP); SAKAI, Toshiaki, Tokyo 100-8322 (JP); HARA, Natsuko, Tokyo 100-8322 (JP); YOSHIDA, Sho, Tokyo 100-8322 (JP)
(74) Representative: SSM Sandmair
(86) International application number: PCT/JP2023/032929
(87) International publication number: WO 2024/053744

(57) **Abstract**

A coating removing method is, for example, a coating removing method for removing an insulation coating of an electric wire including a core wire and the insulation coating made of an organic polymer material by irradiation with laser light, in which the insulation coating is removed by irradiating each place of a region of a surface of the electric wire from which the insulation coating is to be removed with the laser light a plurality of times. The coating removing method may include a first step of irradiating the surface of the electric wire with the laser light to thin the insulation coating, and a second step of irradiating the insulation coating thinned in the first step with the laser light to remove the insulation coating. In the first step, a thickness of the coating may be decreased to 1 [µm] or less.

## Description

### Field

The present invention relates to a coating removing method and a coating removing apparatus.

### Background

Hitherto, a coating removing method and a coating removing apparatus for removing a coating of an electric wire by irradiation with laser light to expose a conductor covered by the coating have been known (Patent Literature 1).

### Citation List

### Patent Literature

Patent Literature 1: JP 2017-220634 A

### Summary

### Technical Problem

For this type of coating removing method, for example, it is beneficial to obtain an improved novel coating removing method capable of achieving a higher level of balance between suppression of the residue of the coating and reduction of an influence on the conductor.

Therefore, one of the problems of the present invention is to provide, for example, an improved novel coating removing method and coating removing apparatus. Solution to Problem

A coating removing method according to the present invention, for example, removes an insulation coating of an electric wire including a core wire and the insulation coating made of an organic polymer material, and includes: a step of installing the electric wire at a position where a surface of the electric wire is irradiated with laser light; and a removing step of removing the coating by irradiating each place of a target region from which the coating is to be removed on the surface of the electric wire with the laser light having a wavelength of 300 nm or more and 600 nm or less a plurality of times.

The removing step may include: a first step of irradiating the surface of the electric wire with the laser light to thin the coating; and a second step of irradiating the coating thinned in the first step with the laser light to remove the coating.

In the first step, a thickness of the coating may be decreased to 1 µm or less.

An energy amount of the laser light output in the first step may be equal to or larger than an energy amount of the laser light output in the second step.

A power density at a focal position of the laser light in the second step may be higher than a power density at a focal position of the laser light in the first step.

At least one of a power density at a focal position of the laser light, power of the laser light, a spot diameter of the laser light on the surface, a scanning speed in a case where a spot of the laser light may be scanned on the surface, and a shift amount in a case where the spot of the laser light may be scanned a plurality of times while being shifted in a direction intersecting a scanning direction on the surface may be different between the first step and the second step.

In the first step, the coating may be combusted by energy applied to the coating from the laser light, and in the second step, the coating may be combusted by energy applied to the core wire and the coating from the laser light.

The removing step may include a plurality of steps of irradiating a specific region of the target region from which the coating is to be removed with a beam of the laser light while performing scanning.

In the plurality of steps of irradiating the specific region with the beam of the laser light while performing the scanning, a scanning position may be shifted in a direction intersecting a scanning direction.

A shift amount of the scanning position may be 1/3 or more and 1/2 or less of a width of an irradiation region in the scanning.

A plurality of times of scanning of the laser light may be performed while shifting in a direction intersecting a scanning direction, and irradiation regions of two consecutive times of scanning partially may overlap each other in the direction intersecting the scanning direction.

An overlapping ratio of widths of the irradiation regions of the two consecutive times of scanning may be 1/4 or more.

An overlapping ratio of widths of the irradiation regions of the two consecutive times of scanning may be 5/6 or less.

An overlapping ratio of widths of the irradiation regions of the two consecutive times of scanning may be 1/4 or more and 5/6 or less.

The removing step may include a step of irradiating the electric wire with a spot of the laser light while performing scanning in a state in which a power density at a focal position of the laser light may be 230 kW/cm² or more.

The removing step may include a plurality of steps of irradiating a specific region of the target region from which the coating is to be removed with a beam of the laser light while performing scanning, and in a last step of the plurality of steps, the electric wire may be irradiated with a spot of the laser light while performing the scanning in a state in which a power density at a focal position of the laser light may be 230 kW/cm² or more.

A wavelength of the laser light may be 400 nm or more and 550 nm or less.

In the removing step, a power density at a focal position of the laser light may be 350 kW/cm² or more.

In the removing step, a diameter of a beam at a focal position of the laser light may be 500 µm or less.

In the removing step, the diameter of the beam at the focal position of the laser light may be 200 µm or more.

The diameter of the beam at the focal position of the laser light may be 300 µm or more and 400 µm or less.

The laser light may be a continuous wave laser.

The laser light may be laser light output from one laser module, and power of the one laser module may be 400 W or more.

The power of the one laser module may be 1 kW or less.

A spot of the laser light may be scanned using a laser scanner.

A spot of the laser light may be scanned by rotating the electric wire around a central axis extending in an axial direction of the electric wire.

A spot of the laser light may be scanned using a laser scanner, and the spot of the laser light may be scanned by rotating the electric wire around a central axis extending in an axial direction of the electric wire.

End portions of two electric wires, each of which is the electric wire, may be brought into contact with each other to arrange the two electric wires in a substantially straight line, and the coating may be removed at a portion adjacent to the end portions of the two electric wires.

The coating may be removed at a middle portion of the electric wire in a longitudinal direction, and the electric wire may be cut into two in the longitudinal direction at a middle position in a section from which the coating is removed in the longitudinal direction.

The laser light may be output from an optical head, a central axis of the electric wire may be disposed at a position away from the optical head in a first direction, and the coating to be removed may be disposed in a range of ±3 mm or less in the first direction with respect to a focal position of the laser light.

The laser light may be output from an optical head, the electric wire may have a plurality of side surfaces extending in a longitudinal direction and a plurality of ridge lines as angular portions extending in the longitudinal direction between two side surfaces adjacent to each other, the coating may be irradiated with the laser light in a posture in which one of the plurality of ridge lines and two side surfaces on both sides of the ridge line face the optical head, and the coating forming the one ridge line, the two side surfaces, and a ridge line adjacent to each of the two side surfaces on a side opposite to the one ridge line may be removed.

A central axis of the electric wire may be disposed at a position away from the optical head in a first direction, each of the two side surfaces may be arranged in a posture in which a plane orthogonal to the first direction is rotated by a predetermined angle about the central axis, and may be arranged in a posture in which a minimum angular difference between a normal direction and a direction opposite to the first direction is different between the two side surfaces, and the larger the minimum angle difference, the higher the power density of the laser light with which the side surface may be irradiated on an imaginary plane orthogonal to the first direction.

A central axis of the electric wire may be disposed at a position away from the optical head in a first direction, and a power density of the laser light applied to a ridge line adjacent to the side surface on a side opposite to the one ridge line on an imaginary plane orthogonal to the first direction may be made higher than a power density of the laser light applied to the one ridge line and the two side surfaces on the imaginary plane.

An end portion of the electric wire may have a protruding shape protruding in a longitudinal direction of the electric wire.

In the removing step, the coating may be removed while supplying oxygen.

The laser light may include laser light having a wavelength at which an absorption rate of the coating is 80 % or more.

In the removing step, a removal region of the coating may expand in a second direction, and oxygen may be supplied in a direction including a component of the second direction.

In the removing step, a scanning direction of the beam may change with time.

In the removing step, the beam may move while turning back or spirally on the surface such that a removal region of the coating gradually expands in at least a partial section of the scanning of the beam.

Irradiation power of the laser light per unit area on the surface may be changed while the coating is removed by scanning the beam.

In the removing step, the irradiation power of the laser light per unit area on the surface may be decreased while the coating is removed by scanning the beam.

In the removing step, the irradiation power of the laser light per unit area on the surface may be changed by changing at least one of a scanning speed of the laser light and an output of a light source of the laser light.

In the removing step, the electric wire and the beam may move relative to each other in an axial direction of the electric wire in at least a partial section of the scanning of the beam.

In the removing step, the electric wire and the beam may move relative to each other in a direction intersecting an axial direction of the electric wire in at least a partial section of the scanning of the beam.

The core wire may be made of a copper-based metal material.

The electric wire may be a flat wire or a round wire.

In the removing step, the coating may remain before final irradiation among the plurality of times of irradiation at each place.

In the removing step, a region of the coating that is not removed may be covered with a cover.

A coating removing apparatus according to the present invention, for example, includes: a laser device configured to output laser light; and an optical head configured to irradiate a surface of an electric wire including a core wire and a coating made of an organic polymer material with the laser light output from the laser device, wherein the coating is removed by irradiating each place of a region of the surface from which the coating is to be removed with the laser light a plurality of times.

A wavelength of the laser light may be 300 nm or more and 600 nm or less, and a power density at a focal position of the laser light may be 2.3 kW/mm² or more.

The laser light may be laser light output from one laser module included in the laser device, and power of the one laser module may be 150 W or more.

The coating removing apparatus may include an optical fiber configured to propagate the laser light output from the laser module to the optical head, and a core diameter of the optical fiber may be 200 µm or less.

The laser device may multiplex and output a plurality of beams of laser light having different wavelengths that are 300 nm or more and 600 nm or less. Advantageous Effects of Invention

According to the present invention, for example, an improved novel coating removing method and coating removing apparatus can be provided.

### Brief Description of Drawings

FIG. 1 is an exemplary schematic perspective view of a part of an electric wire from which a coating is removed by a coating removing method of an embodiment.
FIG. 2 is an exemplary schematic configuration diagram of a coating removing apparatus of a first embodiment.
FIG. 3 is a graph illustrating a light absorption rate of a metal material with respect to a wavelength of the light in a case where an organic polymer material is irradiated with the light.
FIG. 4 is a graph illustrating a light absorption rate of the organic polymer material with respect to the wavelength of the light in a case where the organic polymer material is irradiated with the light.
FIG. 5 is an exemplary schematic graph illustrating comparison between a power density distribution (solid line) at a focal position of laser light in the coating removing method of the embodiment and a power density distribution (broken line) at a focal position of laser light according to a related art.
FIG. 6 is a photographic image obtained by imaging a surface of a portion of the electric wire that is processed by a coating removing method of a reference example.
FIG. 7 is a photographic image obtained by imaging a cross section in the vicinity of the surface of the portion in FIG. 6.
FIG. 8 is a photographic image obtained by imaging a surface of a portion of the electric wire that is processed by the coating removing method of the embodiment.
FIG. 9 is a photographic image obtained by imaging a cross section in the vicinity of the surface of the portion in FIG. 8.
FIG. 10 is a photographic image obtained by imaging a surface of a portion of the electric wire that is processed under a condition different from those in FIGS. 8 and 9 by the coating removing method of the embodiment.
FIG. 11 is a photographic image obtained by imaging a cross section in the vicinity of the surface of the portion in FIG. 10.
FIG. 12 is an exemplary schematic plan view illustrating a procedure of the coating removing method of the first embodiment and a temporal change of the electric wire.
FIG. 13 is an exemplary explanatory view illustrating adjacent scanning paths and an overlapping ratio in the coating removing method of the first embodiment.
FIG. 14 is an exemplary schematic side view of a part of the electric wire from which at least a part of the coating is removed by the coating removing method of the first embodiment.
FIG. 15 is a schematic view illustrating a direction of oxygen supplied by the coating removing method of the first embodiment.
FIG. 16 is an exemplary schematic side view of a part of the electric wire from which the coating is removed by the coating removing method of the first embodiment, and is a view illustrating a case where a supply position for oxygen is different from that in FIG. 6.
FIG. 17 is an exemplary schematic plan view illustrating another example of a scanning path of a beam of the laser light in the coating removing method of the first embodiment.
FIG. 18 is an exemplary schematic plan view illustrating a procedure of a coating removing method of a second embodiment and a temporal change of an electric wire.
FIG. 19 is an exemplary schematic side view illustrating the temporal change of the electric wire in the coating removing method of the second embodiment.
FIG. 20 is an exemplary explanatory view illustrating a scanning path in a case where an overlapping ratio is 1/2 in the coating removing method of the second embodiment.
FIG. 21 is an exemplary explanatory view illustrating a scanning path in a case where the overlapping ratio is 1/3 in the coating removing method of the second embodiment.
FIG. 22 is an exemplary schematic front view of an electric wire when viewed in an axial direction in a case where a coating is removed by scanning of laser light on two side surfaces of the electric wire in a coating removing method of a third embodiment.
FIG. 23 is an exemplary schematic front view of the electric wire when viewed in the axial direction in a case where the coating is removed by scanning of the laser light on two side surfaces of the electric wire in the coating removing method of the third embodiment, the two side surfaces being different from those in FIG. 6.
FIG. 24 is an exemplary schematic perspective view of a part of a coating removing apparatus of a fourth embodiment.
FIG. 25 is an exemplary schematic side view illustrating a procedure of removing a coating by a coating removing method of a fifth embodiment.
FIG. 26 is an exemplary schematic side view illustrating a procedure of removing a coating by a coating removing method of a sixth embodiment.
FIG. 27 is an exemplary schematic side view of a part of a coating removing apparatus of the sixth embodiment.
FIG. 28 is an exemplary schematic front view of an example of the electric wire as a target from which the coating is to be removed by the coating removing method of the embodiment when viewed in the axial direction.
FIG. 29 is an exemplary schematic front view of an example of the electric wire as the target from which the coating is to be removed by the coating removing method of the embodiment when viewed in the axial direction.
FIG. 30 is an exemplary schematic front view of an example of the electric wire as the target from which the coating is to be removed by the coating removing method of the embodiment when viewed in the axial direction.
FIG. 31 is an exemplary schematic front view of an example of the electric wire as the target from which the coating is to be removed by the coating removing method of the embodiment when viewed in the axial direction.
FIG. 32 is an exemplary schematic side view of an end portion of the example of the electric wire as the target from which the coating is to be removed by the coating removing method of the embodiment.
FIG. 33 is an exemplary schematic side view of the end portion of the example of the electric wire as the target from which the coating is to be removed by the coating removing method of the embodiment.
FIG. 34 is an exemplary schematic perspective view of the end portion of the example of the electric wire as the target from which the coating is to be removed by the coating removing method of the embodiment.
FIG. 35 is an exemplary schematic plan view of a part of a coating removing apparatus of a modified example of the embodiment.
FIG. 36 is an exemplary schematic front view of a part of the coating removing apparatus of the modified example of FIG. 35.
FIG. 37 is an exemplary schematic plan view of a part of a coating removing apparatus of another modified example different from that in FIGS. 35 and 36.
FIG. 38 is an exemplary schematic side view of a part of a coating removing apparatus of another modified example different from those in FIGS. 35 to 37.

### Description of Embodiments

Hereinafter, exemplary embodiments and modified examples of the present invention are disclosed. Configurations of the embodiments and the modified examples described below, and actions and results (effects) provided by the configurations are examples. The present invention can be implemented by configurations other than those disclosed in the following embodiments and modified examples. In addition, according to the present invention, it is possible to obtain at least one of various effects (including derivative effects) obtained by the configurations.

A plurality of embodiments described below have similar configurations. Therefore, with the configuration of each embodiment, similar functions and effects based on the similar configuration can be obtained. In addition, in the following description, similar reference numerals are given to similar configurations, and an overlapping description may be omitted.

In each drawing, an X direction is represented by an arrow X, a Y direction is represented by an arrow Y, and a Z direction is represented by an arrow Z. The X direction, the Y direction, and the Z direction intersect each other and are orthogonal to each other.

### [First Embodiment]

### [Electric Wire]

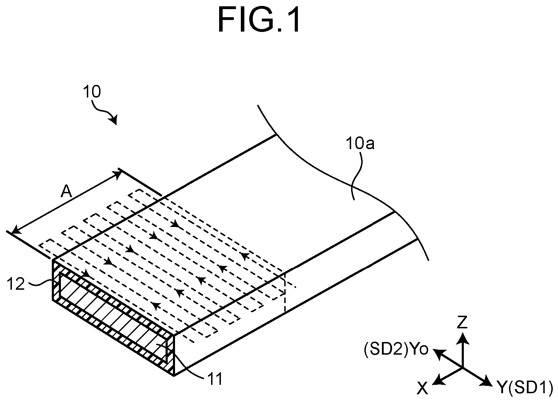

FIG. 1 is a perspective view of an electric wire 10 from which an insulation coating 12 is removed by a coating removing method of a first embodiment. As illustrated in FIG. 1, the electric wire 10 is, for example, a flat wire having a flat rectangular cross section. The electric wire 10 includes a conductor 11 having a belt-like and platelike shape, and the insulation coating 12 surrounding the conductor 11. In the example of FIG. 1, the X direction can be referred to as an axial direction or a longitudinal direction, the Y direction can be referred to as a lateral direction or a width direction, and the Z direction can be referred to as a thickness direction. The conductor 11 is an example of a core wire.

The conductor 11 is made of, for example, a copper-based metal material such as oxygen-free copper or a copper alloy. Further, the insulation coating 12 is made of an organic polymer material such as polyimide, polyether ether ketone, polyamideimide, polyurethane, polyester, or polyesterimide. The organic polymer material can also be referred to as a synthetic resin material. Note that a thickness of the insulation coating 12 can be variously set, and the insulation coating 12 may be formed by laminating a plurality of layers of coatings.

As illustrated in FIG. 1, for example, the insulation coating 12 is removed in a predetermined range A from an end portion of the conductor 11 in order to electrically connect the conductor 11 to another conductor. That is, the predetermined range A is a region from which the insulation coating 12 is to be removed. Note that a position where the insulation coating 12 is removed is not limited to the end portion of the electric wire 10, and may be, for example, a middle position of the electric wire 10 in the longitudinal direction. The predetermined range A can also be referred to as a target region.

The insulation coating 12 is removed by irradiating a surface 10a (side surface) of the electric wire 10 with laser light, the surface 10a of the electric wire 10 being set at a position to be irradiated with the laser light. When removing the insulation coating 12, for example, as indicated by a broken arrow in FIG. 1, a point-like spot (beam) of the laser light is scanned on the surface 10a, that is, on the insulation coating 12. The insulation coating 12 is at least partially combusted and removed at a position irradiated with the spot. A scanning direction of the spot may change over time. In the present embodiment, the spot repeatedly moves while turning back on the surface 10a. The spot and the electric wire 10 relatively move in a direction (the Y direction and a direction Yo opposite to the Y direction) intersecting the axial direction (the X direction) of the electric wire 10. In the example of FIG. 1, the scanning of the spot includes scanning in a scanning direction SD1 (Y direction) and scanning in a scanning direction SD2 (the direction Yo opposite to the Y direction). In the example of FIG. 1, the spot is scanned from the surface 10a of the electric wire 10 to a position deviating from the surface 10a, and turns back at the position deviating from the surface 10a in the Y direction. In this case, output of the laser light may be reduced or stopped at the position deviating from the surface 10a. However, the present invention is not limited thereto, and the spot and the electric wire 10 may move on the surface 10a in the axial direction of the electric wire 10 between the scanning in the scanning direction SD1 and the scanning in the scanning direction SD2, whereby the spot may be scanned on the surface 10a in the axial direction. As the spot moves while turning back, a removal region of the insulation coating 12 gradually expands. In the present embodiment, the removal region expands over time, macroscopically, in a removal direction RD, and microscopically, expands in the scanning direction SD1 and the scanning direction SD2 along with the scanning of the spot (beam).

A scanning range, a turning-back position, the scanning direction, the number of times, and the like are not limited to those illustrated in FIG. 1. For example, the removal region may expand in a direction opposite to the X direction, or the removal region may expand in the Y direction or the direction opposite to the Y direction by repeating scanning in the X direction and the direction opposite to the X direction. Furthermore, a scanning trajectory is not limited to a turning-back shape, and may be a spiral shape. In this case, the removal region of the insulation coating 12 also gradually expands along with spiral movement of the spot. In addition, a surface of the insulation coating 12 that is different from that in FIG. 1 can be removed in the same manner.

### [Laser Processing Apparatus]

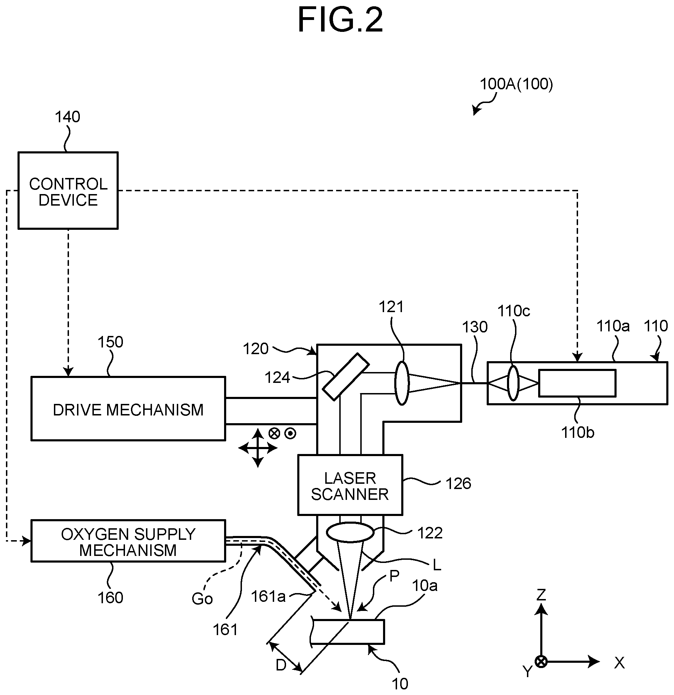

FIG. 2 is a schematic configuration diagram of a laser processing apparatus 100A (100). As illustrated in FIG. 2, the laser processing apparatus 100 includes a laser device 110, an optical head 120, and an optical fiber 130. The laser processing apparatus 100 is an example of a coating removing apparatus.

As an example, the laser device 110 is configured to be able to output the laser light having power of several kW. The laser device 110 includes a housing 110a, a laser module 110b, and a lens 110c.

The laser module 110b outputs the laser light having a wavelength of 300 [nm] or more and 600 [nm] or less. A continuous wave of the laser light is output. That is, the laser light is a continuous wave laser. The laser module 110b is, for example, a chip-on-submount. The laser module 110b can also be referred to as a laser oscillator. Note that the laser light may be a pulse laser.

The lens 110c couples the laser light output from the laser module 110b to the optical fiber 130. That is, the laser module 110b is optically connected to the optical fiber 130 via the lens 110c. The lens 110c is, for example, a condenser lens. The lens 110c is an example of an optical component. Note that the laser device 110 may include an optical component different from the lens 110c.

The optical fiber 130 guides the laser light output from the laser device 110 to the optical head 120.

The optical head 120 is an optical device for irradiating the electric wire 10 with the laser light input from the laser device 110. The optical head 120 includes a collimator lens 121, a condenser lens 122, a mirror 124, and a laser scanner 126. The collimator lens 121, the condenser lens 122, the mirror 124, and the laser scanner 126 can also be referred to as optical components.

The optical head 120 is configured to be able to change a relative position with respect to the electric wire 10 in order to scan the laser light while irradiating the surface 10a of the electric wire 10 with the laser light. Note that the scanning of the spot on the surface 10a may be implemented by at least one of the movement of the optical head 120, the movement of the electric wire 10, and a change in a beam emission direction of the laser light from the optical head 120.

The collimator lens 121 collimates the laser light input via the optical fiber 130. The collimated laser light becomes collimated light.

The mirror 124 reflects the laser light collimated by the collimator lens 121. The laser light reflected by the mirror 124 travels in a direction opposite to the Z direction in the example of FIG. 2, and travels toward the condenser lens 122. Note that the mirror 124 is unnecessary in a configuration in which the laser light is input to the optical head 120 so as to travel in the direction opposite to the Z direction.

The laser scanner 126 is, for example, a galvano scanner including a plurality of mirrors (not illustrated). The galvano scanner can switch an output direction of laser light L from the optical head 120 by changing angles of the plurality of mirrors. The angle of each of the mirrors is changed by, for example, a motor (not illustrated) controlled by a control device 140. The laser scanner 126 is an example of a scanning mechanism that scans a beam (spot) of the laser light L on the surface 10a of the electric wire 10. Note that the optical head 120 may include the laser scanner 126 other than the galvano scanner.

The condenser lens 122 condenses the laser light as the collimated light and irradiates an irradiation point P on the surface 10a of the electric wire 10 with the laser light L (output light). The irradiation point P is an example of an irradiation position. The laser light L is output from the condenser lens 122, that is, the optical head 120, toward the electric wire 10 in a direction substantially along the direction opposite to the Z direction.

The laser processing apparatus 100 further includes a drive mechanism 150 and an oxygen supply mechanism 160.

The drive mechanism 150 changes the relative position of the optical head 120 with respect to the electric wire 10. The drive mechanism 150 includes, for example, a rotation mechanism such as a motor, a deceleration mechanism that decelerates a rotational output of the rotation mechanism, a motion conversion mechanism that converts a rotation decelerated by the deceleration mechanism into a linear motion, and the like.

The oxygen supply mechanism 160 supplies oxygen gas Go (oxygen-containing gas) toward the irradiation point P through a pipe 161. The oxygen gas Go is discharged at a predetermined flow rate from a discharge port 161a of a nozzle provided at a tip of the pipe 161 and facing the irradiation point P. The laser processing apparatus 100 removes the insulation coating 12 from the electric wire 10 by emitting the laser light L while supplying the oxygen gas Go. As the oxygen gas Go is supplied, combustion of the insulation coating 12 is promoted, and removal performance for the insulation coating 12 can be improved as compared with a case where the oxygen gas Go is not supplied.

Through intensive studies by the inventors, it has been found that a distance D between the discharge port 161a and the irradiation point P is preferably 5 [mm] or more and 25 [mm] or less, and more preferably 10 [mm] or more and 20 [mm] or less. In addition, it has been found that a flow velocity of the oxygen gas Go is preferably 3.0 [m/s] or more and 35 [m/s] or less at the discharge port 161a. Furthermore, it has been found that an inner diameter of the discharge port 161a (nozzle) is preferably equal to or larger than a width of the electric wire 10 so that variation in an oxygen supply amount is less likely to occur over the entire width direction of the electric wire 10. As an example, in a case where the inner diameter is 8 [mm], the flow rate of the oxygen gas Go necessary for obtaining the above-described flow velocity of 3.0 [m/s] or more and 35 [m/s] or less is 10 [L/min] or more and 100 [L/min] or less. It has been found that the flow rate of the oxygen gas Go is preferably 30 [L/min] or more, more preferably 50 [L/min] or more, and still more preferably 70 [L/min] or more in various cases. In a case where the distance D is excessively small, a thermal influence on the nozzle becomes large. On the other hand, in a case where the distance D is excessively large, the oxygen gas Go is hardly supplied to the irradiation point P. In addition, it has been found that when the flow rate of the oxygen gas Go is less than 50 [L/min] in a range of the distance D, the removal performance for the insulation coating 12 is deteriorated.

The inventors have confirmed that, by setting the distance D and the oxygen gas Go as described above, the laser processing apparatus 100 can quickly remove the insulation coating 12 from the electric wire 10 in which the thickness of the insulation coating 12 is 30 [µm] or more, 50 [µm] or more, or 70 [µm] or more, thereby obtaining a high-quality surface of the conductor 11 with less residues or the like.

In addition, the laser processing apparatus 100 includes the control device 140 that controls operations of the laser device 110, the drive mechanism 150, and the oxygen supply mechanism 160. The control device 140 is, for example, a computer including a controller, a main storage unit, an auxiliary storage device, and the like.

For example, the control device 140 can control the operation of the laser device 110 so as to output the laser light, stop the output of the laser light, or change an output intensity of the laser light.

For example, the control device 140 can control the operation of the drive mechanism 150 such that the irradiation point P of the laser light in the electric wire 10 moves and the irradiation point P is scanned, that is, the relative position between the optical head 120 and the electric wire 10 changes. The drive mechanism 150 is an example of a scanning mechanism that scans the beam (spot) of the laser light L on the surface 10a of the electric wire 10.

In addition, the control device 140 can control the operation of the oxygen supply mechanism 160 to supply the oxygen gas Go, stop the supply of the oxygen gas Go, or change the supply flow rate of the oxygen gas Go, for example.

A concentration of oxygen in the oxygen gas Go is set according to combustibility of a material of the insulation coating 12. Specifically, the concentration of oxygen to be supplied is set lower as the combustibility of the material of the insulation coating 12 is higher, and the concentration of oxygen to be supplied is set higher as the combustibility of the material of the insulation coating 12 is lower. The concentration of oxygen is adjusted by, for example, a switching mechanism such as an electromagnetic valve capable of changing a discharge flow rate from an oxygen tank. With such a configuration and setting, for example, it is possible to obtain effects such as suppression of combustion of the insulation coating 12 beyond a predetermined range and more efficient and more rapid combustion. Note that the concentration of oxygen in the oxygen gas Go is appropriately set within a range of a concentration of oxygen in the air or more and a concentration of oxygen in pure oxygen or less. The concentration of oxygen is, for example, a concentration at a fixed position such as a tip of the nozzle of the pipe 161. Further, the oxygen gas may be air.

### [Wavelength of Laser Light and Light Absorption Rate]

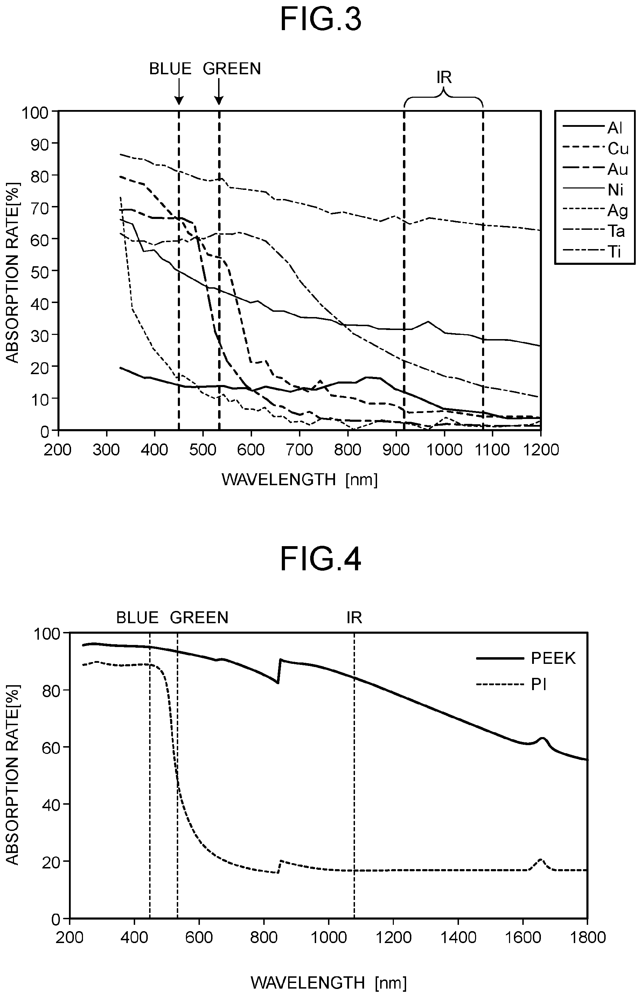

FIG. 3 is a graph illustrating a light absorption rate of each material with respect to the wavelength of the light in a case where each metal material is irradiated with the light. In the graph of FIG. 3, a horizontal axis represents the wavelength, and a vertical axis represents the absorption rate. FIG. 3 illustrates a relationship between the wavelength and the absorption rate for aluminum (Al), copper (Cu), gold (Au), nickel (Ni), silver (Ag), tantalum (Ta), and titanium (Ti). As illustrated in FIG. 3, the light absorption rates of the metal materials vary depending on the wavelength of the light, and the absorption rate tends to increase as the wavelength is shorter.

FIG. 4 is a graph illustrating a light absorption rate of each material with respect to the wavelength of the light in a case where two types of organic polymer materials (polyetheretherketone (PEEK) and polyimide (PI)) are irradiated with the light. FIG. 4 illustrates the absorption rate in a case where the thickness of the coating is 165 [µm] for PEEK, and the absorption rate in a case where the thickness of the coating is 120 [µm] for PI. In the graph of FIG. 4, a horizontal axis represents the wavelength, and a vertical axis represents the absorption rate. As illustrated in FIG. 4, the light absorption rates of the organic polymer materials vary depending on the wavelength of the light, and the absorption rate tends to increase as the wavelength is shorter.

According to intensive studies by the inventors, it has been found that the wavelength of the laser light is, for example, preferably 300 [nm] or more and 600 [nm] or less, more preferably 400 [nm] or more and 550 [nm] or less, and still more preferably 500 [nm] or less from the viewpoint of an absorption rate of the conductor 11 made of a conductive metal material for energy of the laser light and an absorption rate of the insulation coating 12 made of an organic polymer material for the energy of the laser light. In this case, in particular, it has been found that the insulation coating 12 can be efficiently removed by irradiating the organic polymer material with the light having a wavelength at which the absorption rate of the organic polymer material is 80 [%] or more. This is estimated to be because an effect of enhancing the combustibility of the insulation coating 12 can be obtained by rapidly increasing a temperature of the conductor 11 and a temperature of the insulation coating 12. Note that, in the removal of the insulation coating 12 in consideration of the absorption rate of the material, for example, it is preferable to appropriately set conditions such as an energy amount and a power density of the laser light L in consideration of an absorption rate per unit length or unit volume of the insulation coating 12, the thickness of the insulation coating 12, a volume of the insulation coating 12 to be removed, and the like.

### [Beam Diameter and Power Density of Laser Light]

As described above, in the present embodiment, the laser device 110 includes only one laser module 110b. Here, in a case where the laser device 110 includes a plurality of laser modules 110b, it is difficult to reduce a condensing area of the laser light output from the laser device 110 due to variations in specifications such as positions and shapes of the plurality of laser modules 110b and the optical components, a plurality of modes included in the laser light, and the like. Therefore, the laser light more easily spreads as compared with a case where the laser device 110 includes only one laser module 110b. In other words, in a case where the laser device 110 includes the plurality of laser modules 110b, a beam diameter of the laser light output from the laser device 110 tends to be larger than a beam diameter of the laser light output from the laser device 110 in a case where the laser device 110 includes only one laser module 110b. Accordingly, the laser light L output from the optical head 120 via the optical fiber 130 also easily spreads, in other words, the beam diameter of the laser light L also easily increases.

However, in a case where the laser device 110 includes only one laser module 110b, it is difficult to increase the power of the laser light L as compared with a case where only the plurality of laser modules 110b are included.

In this regard, in the present embodiment, the laser device 110 includes only one newly developed laser module 110b capable of outputting the laser light having a wavelength of 400 [nm] or more and 550 [nm] or less with higher power of 150 [W] or more. In addition, since the beam diameter of the laser light in the laser device 110 can be reduced, the optical fiber 130 having a core diameter of 110 [µm] or less can be used as the optical fiber 130.

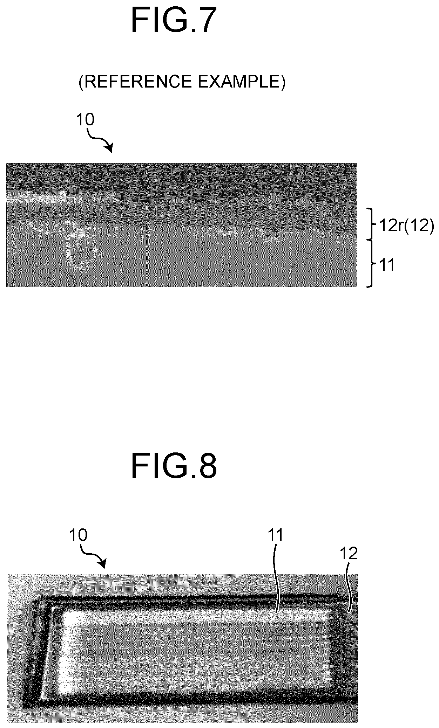

With such a configuration, the laser processing apparatus 100 can output the laser light L having a suitable wavelength, a smaller beam diameter (spot diameter), and a higher power density to the electric wire 10. The inventors have found that by performing irradiation with the laser light L from such a laser processing apparatus 100 under a predetermined condition, a residue 12r (see FIG. 7) of the insulation coating 12 can be further reduced, and a processing time can be greatly shortened, thereby further reducing an influence such as melting and oxidation of the conductor 11. Hereinafter, the suitable conditions will be described.

### [Suitable Irradiation Conditions]

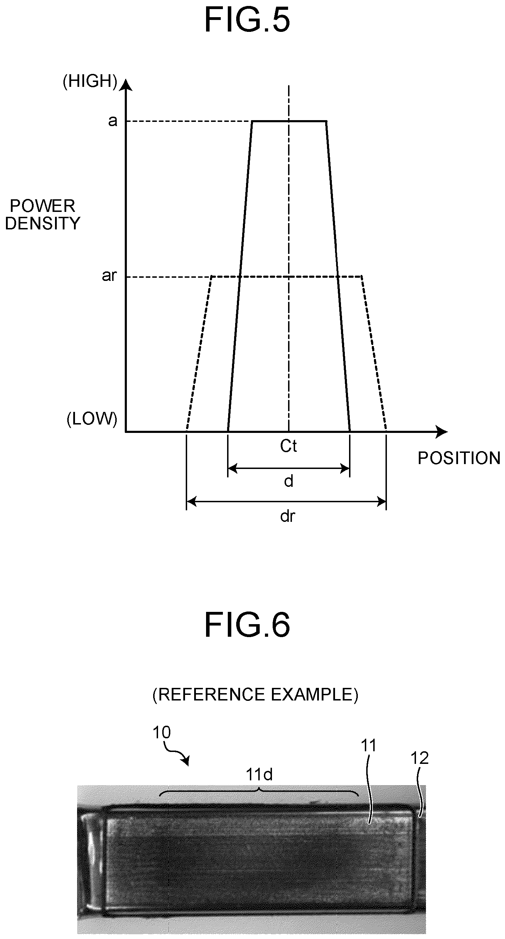

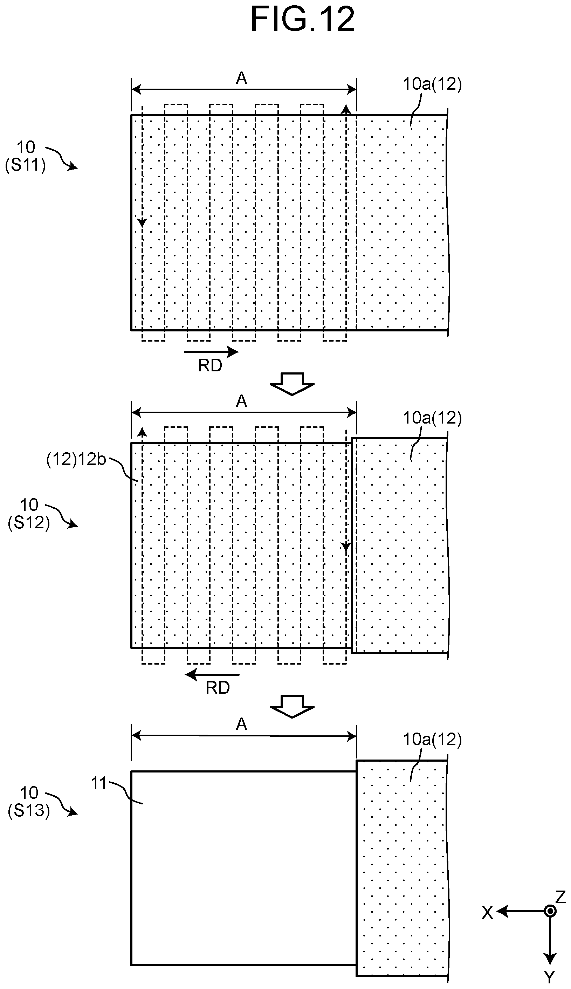

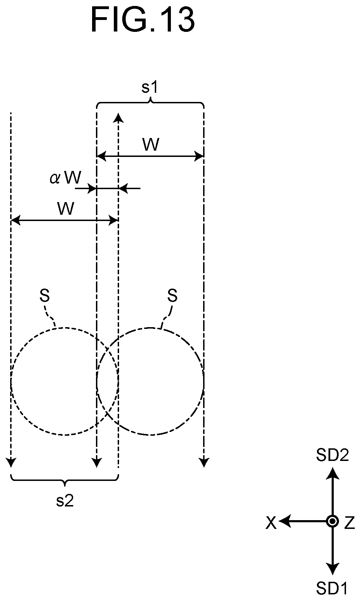

FIG. 5 illustrates comparison in a power density distribution at each position along an imaginary line that passes through an optical axis of the laser light and is perpendicular to the optical axis at a focal position of the laser light output from the optical head 120 between a reference example (broken line) and the present embodiment (solid line). The broken line in the reference example indicates the power density distribution of the laser light output from the optical head in a case where beams of the laser light output from the plurality of laser element modules in the laser device are multiplexed and the laser light is output from the laser device via the optical fiber and the optical head. The solid line in the present embodiment indicates the power density distribution of the laser light L output from one laser module 110b via the optical fiber 130 and the optical head 120. In FIG. 5, a horizontal axis of the graph represents a position on the imaginary line, Ct represents a position (center) intersecting the optical axis on the imaginary line, and a vertical axis of the graph represents the power density [W/cm²]. Further, d represents the beam diameter (the diameter of the beam) at the focal position of the laser light L according to the present embodiment, a represents a maximum value of the power density of the laser light L at each position on the imaginary line according to the present embodiment, dr represents the beam diameter at the focal position of the laser light according to the reference example, and a represents a maximum value of the power density of the laser light at each position on the imaginary line according to the reference example. Note that the beam can be defined as a range in which the power density is 1/e² or more of a peak of the power density, and the beam diameter can be defined as a diameter of the range. In addition, the beam diameter at the focal position is a diameter on an imaginary plane Vp (see FIGS. 12 and 13) orthogonal to the direction opposite to the Z direction.

As illustrated in FIG. 5, the maximum value a of the power density of the beam of the laser light L according to the present embodiment based on the laser light output from one high-power laser module 110b as described above is larger than the maximum value ar of the power density according to the reference example. In addition, the diameter d of the beam of the laser light L according to the present embodiment is smaller than the diameter dr of the beam of the laser light according to the reference example. As described above, in the present embodiment, since the laser light output from the laser device 110 including only one high-output laser module 110b is emitted, the laser light L can be intensively emitted in a narrower range as compared with a case where the laser light output from the laser device including a plurality of laser modules is emitted as in the reference example, and the power density of the laser light L can be increased accordingly.

As the beam of the laser light L is wider, the energy is also supplied to a peripheral portion of a region to be removed in the insulation coating 12. Therefore, energy efficiency is reduced, and it is difficult to achieve both removal of the insulation coating 12 by combustion and prevention of adverse effects such as melting and oxidation of the conductor 11. In this regard, in the present embodiment, the beam of the laser light L can be narrowed and the power density can be increased, and thus, the energy can be intensively applied to the region to be removed in the insulation coating 12, so that the region can be combusted more accurately and more reliably, and a higher level of balance between the removal of the insulation coating 12 by selective combustion and the prevention of the adverse effects such as melting and oxidation of the conductor 11 can be achieved.

FIGS. 6, 8, and 10 are photographic images obtained by imaging a surface of a portion of the electric wire that is processed by the coating removing method, and FIGS. 7, 9, and 11 are photographic images obtained by imaging a cross section in the vicinity of the surface of the processed portion.

FIGS. 6 and 7 are views in a case where
- the beam diameter at the focal position: 600 [µm]
- the output of the laser module 110b: 300 [W]
- an average value of the power density at the focal position (= the power/(the cross-sectional area in the cross section orthogonal to the optical axis of the beam)): 106 [kW/cm²]
- a scanning speed: 3200 [mm/s]
in a coating removing method according to the reference example. Under this condition, a discolored region 11d is caused on a surface 11a of the conductor 11 as illustrated in FIG. 6, and a layer of the residue 12r of the insulation coating 12 remained on the surface 11a of the conductor 11 as illustrated in FIG. 7. It is estimated that the discolored region 11d in FIG. 6 is caused by the residue 12r or the oxidation of the conductor 11.

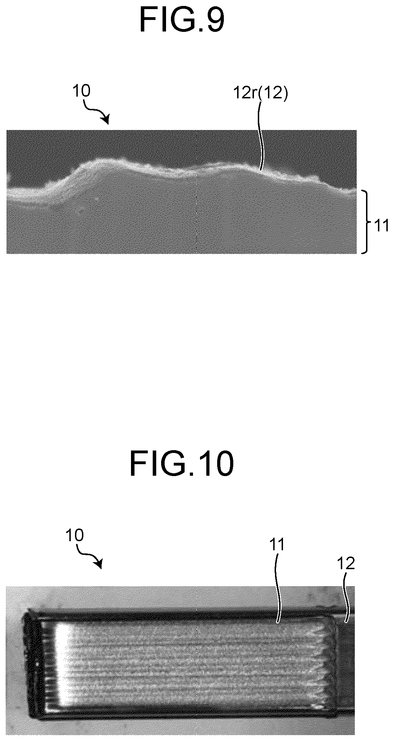

FIGS. 8 and 9 are views in a case where
- the beam diameter at the focal position: 400 [µm]
- the output of the laser module 110b: 300 [W]
- the average value of the power density at the focal position: 239 [kW/cm²]
- the scanning speed: 2000 [mm/s]
in the coating removing method according to the embodiment. Under this condition, as illustrated in FIG. 8, the discolored region 11d as in FIG. 6 does not exist on the surface 11a of the conductor 11, and the surface 11a is exposed in a clean state. In addition, under this condition, as illustrated in FIG. 9, the layer of the residue 12r was extremely thin or did not exist unlike in FIG. 7.

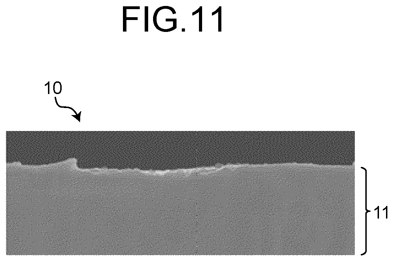

Further, FIGS. 10 and 11 are views in a case where
- the beam diameter at the focal position: 400 [µm]
- the output of the laser module 110b: 450 [W]
- the average value of the power density at the focal position: 358 [kW/cm²]
- the scanning speed: 2000 [mm/s]
in the coating removing method according to the embodiment. Even under this condition, as illustrated in FIG. 10, the discolored region 11d as in FIG. 6 does not exist on the surface 11a of the conductor 11, and the surface 11a is exposed in a cleaner state than that in FIG. 8. Under this condition, as illustrated in FIG. 11, almost no layer of the residue 12r existed.

From analysis of experimental results including the experimental results described above, and from the viewpoint of achieving both of more reliable removal of the insulation coating 12 and the prevention of the adverse effects such as melting and oxidation of the conductor 11, the inventors have found the following conditions (first conditions).
- The wavelength of the laser light is preferably 400 [nm] or more and 550 [nm] or less, and more preferably 500 [nm] or less.
- The laser light is preferably a continuous wave laser.
- The average value of the power density at the focal position of the laser light L is preferably 230 [kW/cm²] or more, and more preferably 350 [kW/cm²] or more.
- The beam diameter at the focal position is preferably 500 [µm] or less, and more preferably 400 [µm] or less.
- The average value of the power density of the laser light L on the surface 10a of the insulation coating 12 is preferably 250 [kW/cm²] or more, and more preferably 350 [kW/cm²] or more.
- The power of one laser module 110b included in the laser device 110 is preferably 150 [W] or more.
- The core diameter of the optical fiber 130 is preferably 200 [µm] or less.

Further, when the power of the laser light is excessively high, it is difficult to selectively remove the insulation coating 12. From such a viewpoint, the inventors of the present invention have found the following conditions (second conditions).
- The beam diameter at the focal position is preferably 200 [µm] or more, and more preferably 300 [µm] or more.
- The average value of the power density of the laser light L on the surface 10a of the insulation coating 12 is preferably 650 [kW/cm²] or less, and more preferably 550 [kW/cm²] or less.
- The power of one laser module 110b included in the laser device 110 is preferably 1 [kW] or less.

### [Procedure for Removing Coating]

FIG. 12 is a plan view illustrating a coating removal procedure in the present embodiment. In FIG. 12, a broken line arrow indicates a scanning path of the spot (beam) of the laser light L.

As illustrated in FIG. 12, in the present embodiment, first, the electric wire 10 is installed at a predetermined position (processing position) with respect to the laser processing apparatus 100. Thereafter, the entire predetermined range A is irradiated with the spot (beam) of the laser light L while performing the scanning (S11). However, in this case, in S11, each condition such as a size of the spot on the surface 10a, a scanning interval (pitch), the power of the laser device 110, the scanning speed, or the power density of the laser light per unit area on the surface 10a is set such that the insulation coating 12 is not completely removed, in other words, the conductor 11 is not exposed in the predetermined range A. In this case, in S11, the insulation coating 12 is not completely removed, the insulation coating 12 is thinned and remains, and a stepped surface 12b lowered from the surface 10a in the direction opposite to the Z direction appears as a top surface of the residual portion. Note that, in S11, the scanning of the spot of the laser light L and expansion of the removal region in the removal direction RD may be performed a plurality of times until a residual thickness of the insulation coating 12 becomes a predetermined value (for example, 1 [µm]) or less. At this time, the scanning direction and the removal direction RD may be appropriately changed. S11 is an example of a removing step, and is an example of a first step of thinning the insulation coating 12.

Next, the entire predetermined range A is irradiated again with the spot (beam) of the laser light L while performing the scanning (S12). As a result, the insulation coating 12 remaining in S11 is removed, and the conductor 11 is exposed (S13). In this case, in S12, each condition such as the size of the spot on the surface 10a, the scanning interval, the power of the laser device 110, the scanning speed, or the power density of the laser light per unit area on the surface 10a is set such that the insulation coating 12 remaining in S11 is removed in S12. Note that, in S12, the scanning of the spot of the laser light L and the expansion of the removal region in the removal direction RD may be performed a plurality of times. At this time, the scanning direction and the removal direction RD may be appropriately changed. S12 is an example of the removing step, and is an example of a second step of removing the insulation coating 12 thinned in S11.

Here, in each of S11 and S12, the size of the spot and the scanning interval are set such that variation in the power density per unit area is reduced, so that, for example, the residue of the insulation coating 12 and unevenness of the exposed conductor 11 within the predetermined range A can be suppressed as much as possible. FIG. 13 is a plan view illustrating irradiation ranges of scannings s1 and s2 adjacent to each other. In the scanning s1, a spot S of the laser light L is scanned in the scanning direction SD1, and in the scanning s2, the spot S of the laser light L is scanned in the scanning direction SD2. A width W of the irradiation region is the same between the scannings s1 and s2 and is the diameter of the spot S. According to intensive studies by the inventors, it has been found that α is preferably 1/4 or more and 5/6 or less in a case where a width of a region where the irradiation regions overlap each other in the scannings s1 and s2 adjacent to each other is αW (α: an overlapping ratio of the widths). Note that the spot S can be defined as, for example, a range in which an intensity is 1/e² or more of a peak intensity in the spot S in the irradiation region when being stationary (non-scanning), and the diameter of the spot S can be defined as the diameter of the range.

In addition, the power of the laser device 110, the scanning speed, the power density of the laser light per unit area on the surface 10a, and the like are set such that the insulation coating 12 remains by each scanning in S11. In addition, in S12, the setting is made such that the insulation coating 12 remaining in S11 is removed by one scanning, and the surface of the conductor 11 is less damaged or oxidized. Note that S11 may be set a plurality of times. In this case, each condition described above may be the same or different for the plurality of times of S11. In addition, each condition described above may be the same or different between S11 and S12.

In the present embodiment, each place within the predetermined range A is irradiated with the laser light L a plurality of times by S11 and S12.

In addition, in S11 and S12, a scanning position may be shifted in a direction intersecting the scanning direction, or in S11 consecutively performed a plurality of times, the scanning position may be shifted in a direction intersecting the scanning direction. Due to such a shift, even when the residue of the insulation coating 12 is caused at both ends of the belt-like irradiation region in the width direction by scanning in each S11, the residue can be removed in the next S11 or S12. According to intensive studies by the inventors, it has been found that a shift amount in this case is preferably 1/3 or more and 1/2 or less of the width W of the irradiation region.

### [Specific Setting Examples of First Step and Second Step]

Further, as a result of intensive studies by the inventors, it has been found that particularly suitable results can be obtained in S11 (first step) and S12 (second step) by setting a removal target and each parameter as illustrated in Table 1 and performing processing of removing the insulation coating 12 under different conditions in S11 and S12.

**Table 1**

| | S11 (First Step) | S12 (Second Step) |
|---|---|---|
| Removal Target | Most of Coating | Coating Remaining in S11 (Thickness: 1 [µm] or less) |
| Energy for Combustion of Coating | Energy Applied to Coating | Energy Applied to Coating and Conductor |
| Energy Amount | Large | Small |
| Power Density | Low | High |
| Power | Low | High |
| Spot Diameter | Large | Small |
| Scanning Speed | Low | High |
| Shift Amount | Large | Small |

First, in S11, most of the insulation coating 12 is peeled off, and the thickness of the insulation coating 12 remaining at the end of S11 is decreased to at least 1 [µm] or less. In this case, the thickness is more preferably 0.8 [µm] or less, and still more preferably 0.5 [µm] or less. At the end of S11, a ratio of an area of an exposed portion of the conductor 11 to an area of the predetermined range A is preferably 50 [%] or less, more preferably 10 [%] or less, and still more preferably 0 [%]. As described above, it has been found that the total processing time of S11 and S12 can be further shortened by removing most of the insulation coating 12 in S11 as compared with a case where the insulation coating 12 remains thicker at the end of S11. Furthermore, it has been found that it is possible to obtain the surface 11a having less residues of the insulation coating 12 and less unevenness at the end of S11 and S12.

In addition, it has been found that it is preferable to combust the insulation coating 12 by the energy applied to the insulation coating 12 from the laser light L in S11 and to combust the insulation coating 12 by the energy applied to the insulation coating 12 and the conductor 11 from the laser light L in S12. In a case where the energy is applied to the conductor 11 from the laser light L from S11 to S12, a state of excessive energy is likely to occur, the melting and oxidation of the conductor 11 may occur, and unevenness of the surface 11a may occur. On the other hand, in a state in which the insulation coating 12 is thinned in S12, it is possible to more efficiently and more quickly raise the temperature of the remaining insulation coating 12 and combust the remaining insulation coating 12 by applying the energy to the conductor 11 rather than applying the energy only to the insulation coating from the laser light L. From such a viewpoint, in S12, it may be preferable to make the power density of the laser light L higher than that in S11. Further, in S11, it is important to apply the energy necessary for the combustion of the insulation coating 12. The surface 11a having less residues of the insulation coating 12 and less unevenness was obtained in a case where the energy amount of the laser light L output in S11 was equal to or larger than the energy amount of the laser light L output in S12.

In addition, from such a viewpoint, in S11 and S12, it has been found that it is preferable to set the energy amount of the output laser light L (the energy amount in Table 1, hereinafter, simply referred to as energy amount), the power density at the focal position of the laser light L (the power density in Table 1, hereinafter, simply referred to as power density), the power of the laser light L (the power in Table 1, hereinafter, simply referred to as power), the spot diameter of the laser light L on the surface 11a (the spot diameter in Table 1, hereinafter, simply referred to as spot diameter), the scanning speed of the spot on the surface 11a (the scanning speed in Table 1, hereinafter, simply referred to as the scanning speed), and the shift amount of the scanning position (the shift amount in Table 1, hereinafter, simply referred to as shift amount) in S11 and S12 described above so as to have a relative relationship in Table 1. In particular, in S12, it is preferable to satisfy the first conditions and the second conditions described above. Note that, in S11, irradiation under the first conditions and the second conditions is not essential, but the irradiation under the first conditions and the second conditions may be performed.

Specifically, the power density in S11 is, for example, preferably 150 [kW/cm²] or more and 650 [kW/cm²] or less, and more preferably 200 [kW/cm²] or more and 550 [kW/cm²] or less. In addition, the power density in S12 is, for example, preferably 230 [kW/cm²] or more and 650 [kW/cm²] or less, and more preferably 350 [kW/cm²] or more and 550 [kW/cm²] or less. In addition, the power, the spot diameter, the scanning speed, and the shift amount are appropriately set so as to satisfy numerical ranges of the energy amount and the power density and the relative relationship in S11 and S12.

### [Supply of Oxygen]

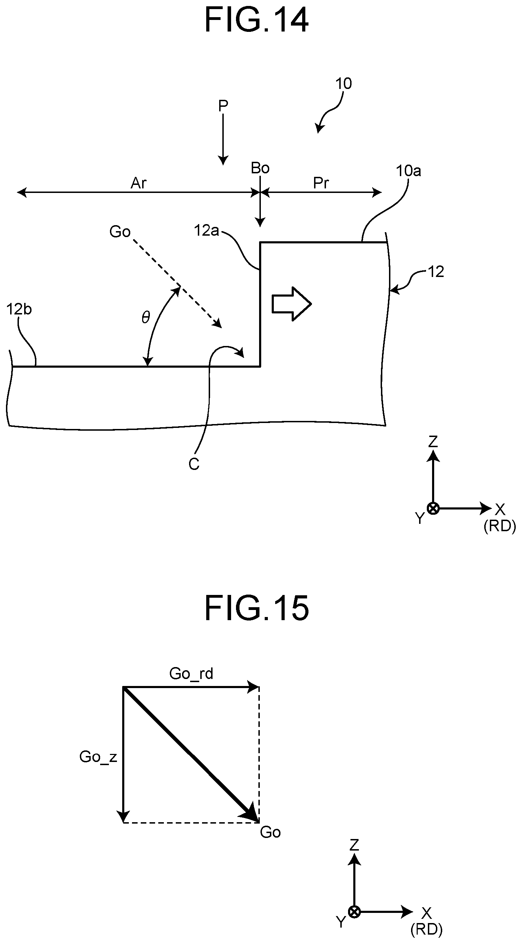

FIG. 14 is a side view of a part of the electric wire 10, and is a view illustrating the vicinity of a boundary Bo between a removal region Ar of the insulation coating 12 and a residual portion Pr in the X direction. As described above, the insulation coating 12 is removed by scanning the spot (beam) of the laser light L, whereby the stepped surface 12b appears and an end surface 12a of the insulation coating 12 appears at the boundary Bo. The end surface 12a is positioned at an end portion of the insulation coating 12 in the direction opposite to the X direction and faces a direction opposite to the removal direction RD. Note that, in FIG. 14, the end surface 12a is schematically drawn to extend substantially in the Z direction, but actually, the end surface 12a may extend obliquely with respect to the Z direction or may have an uneven shape.

As illustrated in FIG. 14, the oxygen gas Go is supplied from a side opposite to the residual portion Pr with respect to the boundary Bo and is supplied toward the boundary Bo. Here, in a case where the oxygen gas Go is supplied from the side opposite to the removal region Ar with respect to the boundary Bo, that is, in a case where the oxygen gas is supplied from a right side or an upper right side with respect to the boundary Bo in FIG. 14, there is a possibility that the oxygen gas is not sufficiently supplied to the vicinity of the boundary Bo, for example, a corner portion C between the end surface 12a and the stepped surface 12b due to the residual portion Pr of the insulation coating 12 serving as an obstacle. In this regard, in the present embodiment, since the oxygen gas Go is supplied from a side opposite to the residual portion Pr with respect to the boundary Bo, the oxygen gas Go is also supplied to the corner portion C without being hindered by the residual portion Pr, so that the combustion of the insulation coating 12 by the irradiation with the laser light is easily promoted, and the residue on the surface 11a can be further reduced. In addition, even in a case where the flow rate of the oxygen gas Go is further increased and the residue is blown off by the oxygen gas Go, the oxygen gas Go is preferably supplied from the side opposite to the residual portion Pr with respect to the boundary Bo and supplied toward the boundary Bo from the viewpoint of blowing the oxygen gas Go to the surface 11a to reach the corner portion C avoiding an interference with the residual portion Pr.

In addition, from experimental research of the inventors, it has been found that an angle θ formed by a supply direction of the oxygen gas Go (a direction of a central axis of the discharge port 161a illustrated in FIG. 2) and a direction in which the surface 11a extends (the X direction and the removal direction RD) is preferably 10° or more and 70° or less, and more preferably 20° or more and 50° or less, from the viewpoint of avoiding an interference between the pipe 161 in the optical head 120 and an emission end portion for the laser light and the viewpoint of sufficiently supplying oxygen to the vicinity of the boundary Bo of the surface 11a.

FIG. 15 is a schematic view illustrating components of vectors in the supply direction of the oxygen gas Go. The supply direction (an arrow Go in FIG. 15) of the oxygen gas Go can be decomposed into a component Go_rd of the X direction (the removal direction RD) and a component Go_z of the direction opposite to the Z direction. That is, the oxygen gas Go is supplied in the direction opposite to the Z direction, that is, a direction including a component of a direction opposite to a normal direction of the surface 11a and a component of the removal direction RD. The removal direction RD is an example of a second direction.

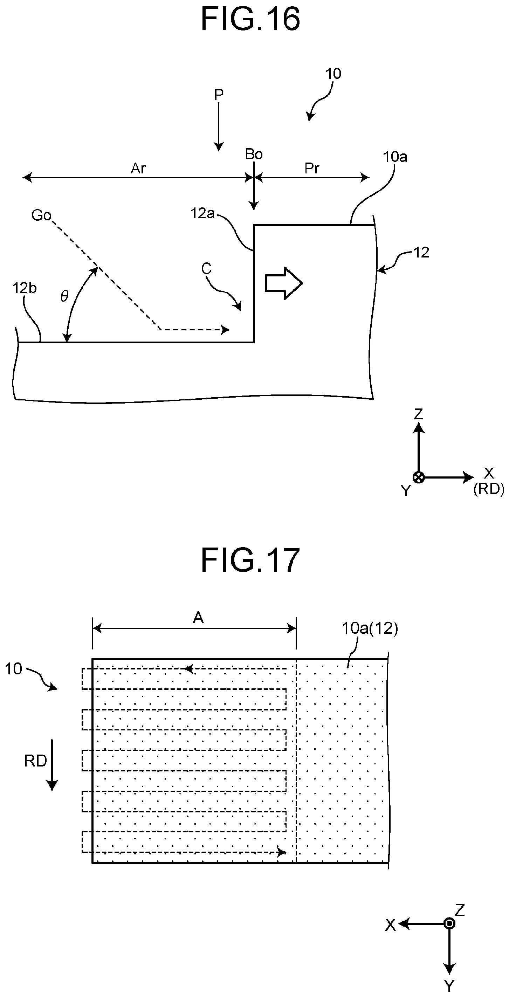

FIG. 16 is a side view illustrating the same position as FIG. 14, and is a view illustrating a case where a supply position for the oxygen gas Go is different from that in FIG. 14. In the example of FIG. 16, the oxygen gas Go is supplied toward a position away from the boundary Bo (the corner portion C) in the direction opposite to the removal direction RD (rearward in the removal direction RD). In this example, the oxygen gas Go is also supplied from the side opposite to the residual portion Pr with respect to the boundary Bo, and the supply direction of the oxygen gas Go is similar to that in FIGS. 14 and 15. Even in such a case, the oxygen gas Go is supplied to the corner portion C without being hindered by the residual portion Pr, and thus, the combustion of the insulation coating 12 by the irradiation with the laser light is easily promoted, and the residue can be further reduced. In addition, even in a case where the flow rate of the oxygen gas Go is further increased and the residue is blown off by the oxygen gas Go, the same effect as in FIG. 14 can be obtained.

FIG. 17 is a plan view illustrating a scanning path of the spot of the laser light L that is different from that in FIG. 12. In FIG. 17, a broken line arrow indicates the scanning path of the spot (beam) of the laser light L. In the example of FIG. 17, the spot is scanned in the X direction and the direction opposite to the X direction. Even in this case, the insulation coating 12 can be removed. Note that the scanning path is not limited to the examples of FIGS. 12 and 17, and can be set in various ways.

As described above, in the present embodiment, by once thinning and then removing the insulation coating 12, the intensity of the laser light L can be set to be lower in both the step of thinning the insulation coating 12 (S11) and the step of removing the thinned insulation coating 12 (S12) as compared with a case of removing the insulation coating 12 without thinning. As a result, for example, it is possible to obtain effects of suppressing damage and deterioration of the insulation coating 12 outside the predetermined range A due to heat applied from the laser light L and suppressing partial melting of the conductor 11. That is, according to the present embodiment, for example, an adverse effect on the periphery of the region in which the coating is removed can be reduced, and an exposed surface of the conductor with a higher quality can be obtained.

In addition, as the conductor 11 is exposed to oxygen or air in a high-heat state for a longer time, oxidation may proceed. In particular, as in the present embodiment, the oxidation is likely to proceed in a state in which the oxygen gas Go is supplied for promoting the combustion of the insulation coating 12. In this regard, in the present embodiment, the conductor 11 is covered by the insulation coating 12 in S11, and thus, the oxidation of the conductor 11 can be suppressed. Furthermore, since the intensity of the laser light L can be further reduced in S12, heating of the conductor 11 by the laser light L can be suppressed, and the removal of the insulation coating 12 thinned in S11 can be performed in a shorter time as compared with a case of removing the thicker insulation coating 12, so that an advantage that the oxidation of the conductor 11 can be further suppressed can be obtained.

### [Second Embodiment]

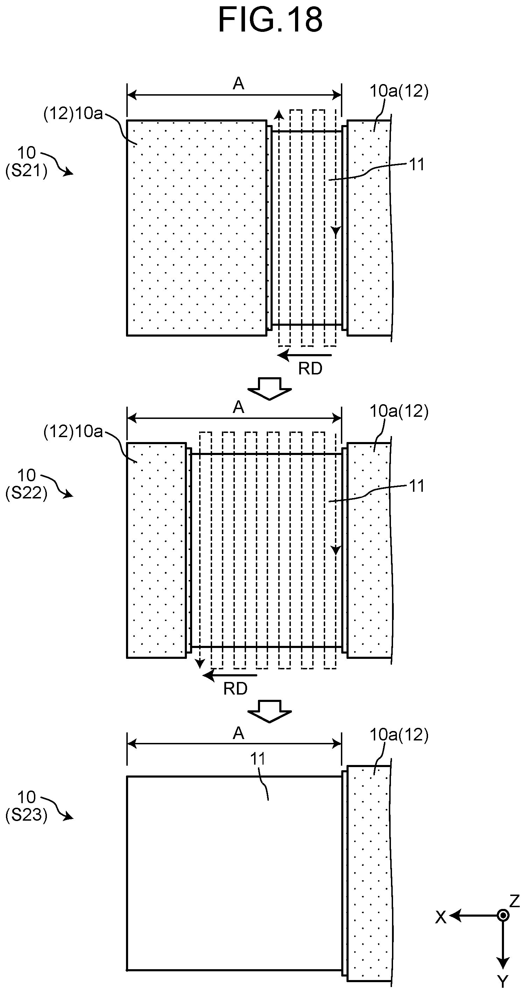

FIG. 18 is a plan view illustrating a coating removal procedure in a second embodiment. In FIG. 18, a broken line arrow indicates a scanning path of a spot (beam) of laser light L. As illustrated in FIG. 18, the scanning path of the present embodiment is similar to that of the first embodiment. However, in the present embodiment, a region where an insulation coating 12 is removed and a conductor 11 is exposed gradually expands (S21 and S22) and is removed (S23). Note that the scanning path and a direction in which the region to be removed expands are not limited to those in FIG. 18.

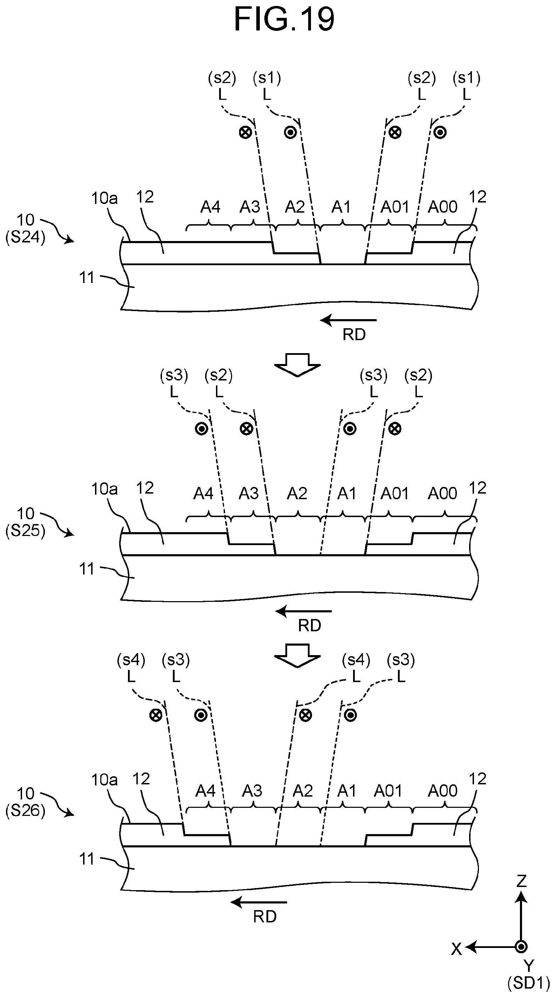

FIG. 19 is a side view illustrating a temporal change of an electric wire 10 when the insulation coating 12 is removed in the present embodiment. As illustrated in FIG. 19, in the present embodiment, scanning s1 in which the spot of the laser light L moves in the Y direction, scanning s2 in which the spot of the laser light L moves in a direction opposite to the Y direction, scanning s3 in which the spot of the laser light L moves in the Y direction, and scanning s4 in which the spot of the laser light L moves in the direction opposite to the Y direction are performed in this order. The scanning path in the scanning s1, the scanning path in the scanning s2, the scanning path in the scanning s3, and the scanning path in the scanning s4 are arranged in this order in the X direction. Further, in two scannings at positions adjacent to each other among the scannings s1 to s4, that is, in the scannings s1 and s2, in the scannings s2 and s3, and in the scannings s3 and s4, irradiation regions for the laser light L overlap with each other. Note that, in FIG. 19, S24 indicates the scannings s1 and s2, S25 indicates the scannings s2 and s3, and S26 indicates the scannings s3 and s4.

S24 indicates a state in which the scanning s2 ends after the scanning s1. When the scanning s2 ends, a region A00 of the insulation coating 12 is not irradiated with the laser light L even once, a region A01 is irradiated with the laser light L only once in the scanning s1, a region A1 is irradiated with the laser light L twice in the scanning s1 and the scanning s2, and a region A2 is irradiated with the laser light L only once in the scanning s1. Here, an intensity of the laser light L is set to an intensity at which substantially half of the thickness of the insulation coating 12 is removed by one time of irradiation and the entire insulation coating 12 is removed by two times of irradiation. Therefore, in S24, in the region A1, the insulation coating 12 is removed and the conductor 11 is exposed, in the regions A01 and A2, substantially half of the thickness of the insulation coating 12 is removed and the other half remains, and in the region A00, the insulation coating 12 is not removed.

S25 indicates a state in which the scanning s3 ends after the scanning s2. When the scanning s3 ends, the region A2 is irradiated with the laser light L twice in the scanning s2 and the scanning s3, and the region A3 is irradiated with the laser light L only once in the scanning s3. Therefore, in S25, in the region A2, the insulation coating 12 is removed and the conductor 11 is exposed, and in the region A3, substantially half of the thickness of the insulation coating 12 is removed and the other half remains.

S26 indicates a state in which the scanning s4 ends after the scanning s3. When the scanning s4 ends, the region A3 is irradiated with the laser light L twice in the scanning s3 and the scanning s4, and the region A4 is irradiated with the laser light L only once in the scanning s4. Therefore, in S26, in the region A3, the insulation coating 12 is removed and the conductor 11 is exposed, and in the region A4, substantially half of the thickness of the insulation coating 12 is removed and the other half remains.

As indicated by S24 to S26, in the present embodiment, for two consecutive scannings in the Y direction, a width (spot size) of the irradiation region and a scanning position are set such that the irradiation regions of the two consecutive scannings partially overlap each other in the X direction, and the intensity of the laser light L is set such that the entire insulation coating 12 is removed by the two scannings (irradiations), and the scanning position is set so as to be slightly shifted in the X direction. Therefore, as illustrated in FIG. 18, a removal region of the insulation coating 12 gradually expands in the X direction.

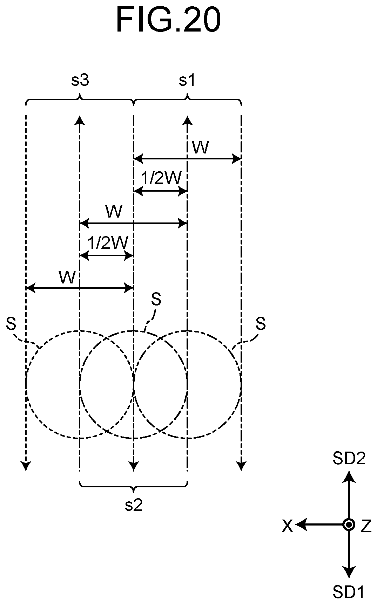

FIG. 20 is a plan view illustrating irradiation ranges of the scannings s1 to s3 adjacent to each other in the present embodiment. In the scanning s1, a spot S of the laser light L is scanned in a scanning direction SD1, in the scanning s2, the spot S of the laser light L is scanned in a scanning direction SD2, and in the scanning s3, the spot S of the laser light L is scanned in the scanning direction SD1. A width W of the irradiation region is the same between the scannings s1 to s3 and is a diameter of the spot S**.** In the example of FIG. 20, an overlapping ratio α is set to 1/2, and a scanning interval is set to 1/2W. In this case, as illustrated in FIGS. 18 and 19, the removal region expands.

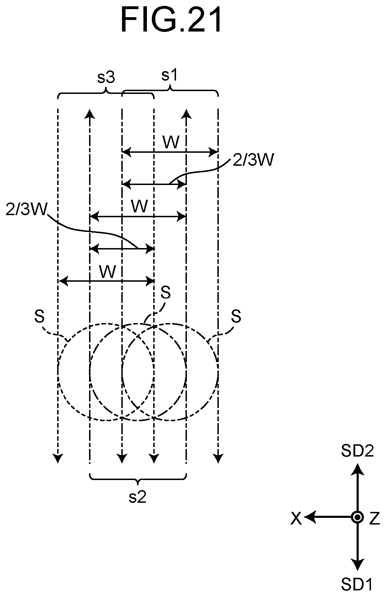

FIG. 21 is a plan view illustrating the irradiation ranges of the scannings s1 to s3 adjacent to each other in the present embodiment, and is a plan view in a case where the overlapping ratio α is 2/3. In this case, the intensity of the laser light L is set such that the entire insulation coating 12 is removed by three times of irradiation, and the scanning interval is set to 1/3W. In this case, the removal region of the insulation coating 12 can also gradually expand in the X direction.

In the present embodiment, each place within a predetermined range A is also irradiated with the laser light L a plurality of times. In addition, the insulation coating 12 is once thinned at each place and then removed. Therefore, the intensity of the laser light L can be set to be lower than that in a case where the insulation coating 12 is removed without being thinned. Therefore, the same effects as those of the first embodiment can be obtained also by the present embodiment.

In the removing method of the present embodiment, since the insulation coating 12 is thinned and then removed by irradiating the same place at least twice, the overlapping ratio α is set to 1/2 or more, and the scanning interval is set to 1/2W or less. This is because, in a case where the overlapping ratio α is lower than 1/2 and the scanning interval is larger than 1/2W, a place where the irradiation is performed once is generated, and for example, a portion where the insulation coating 12 cannot be removed may be generated, a portion where a residue remains may be generated, or unevenness may be caused in the conductor 11.

Further, through intensive studies by the inventors, it has been found that the overlapping ratio α is 2/3 or less, and the scanning interval is preferably 1/3W or more. This is because, when the overlapping ratio α is higher than 2/3 and the scanning interval is smaller than 1/3, it takes time to remove the insulation coating 12, and a time for which the conductor 11 is exposed becomes long, and thus, oxidation easily occurs. When the overlapping ratio α is 1/2 or more and 2/3 or less, deterioration in quality and an increase in required time can be suppressed.

Further, in the present embodiment, an exposure range of the conductor 11 gradually expands in a direction intersecting the scanning direction by the scanning illustrated in FIGS. 18 and 19, but the present invention is not limited thereto, and a region where the insulation coating 12 is thinned, in other words, a thinned remaining region of the insulation coating 12 may gradually expand in the direction intersecting the scanning direction by the scanning similar to FIGS. 18 and 19. In this case, the remaining region can be removed by the method of the first embodiment or the method of the present embodiment to expose the conductor 11. The remaining region may expand a plurality of times.

In a case where the remaining region gradually expands by the scanning similar to FIGS. 18 and 19, a thickness by which the insulation coating 12 is removed and a thickness of the remaining region can be variously changed by setting each condition. In addition, according to the intensive studies by the inventors, it has been found that, in this case, the overlapping ratio α is preferably 1/4 or more from the viewpoint of suppressing variation in the thickness of the remaining region, and the overlapping ratio α is preferably 5/6 or less from the viewpoint of suppressing the time required to remove the insulation coating 12. That is, when the overlapping ratio α is 1/4 or more and 5/6 or less, the deterioration in quality and the increase in required time can be suppressed.

### [Third Embodiment]

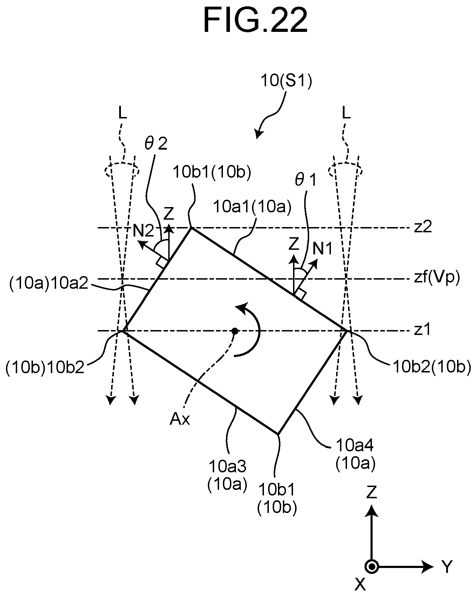

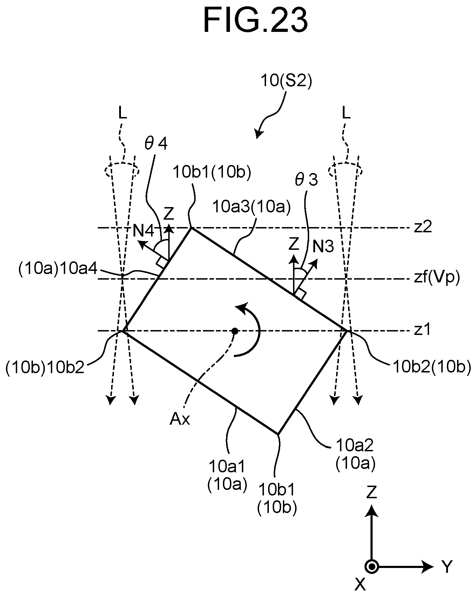

FIGS. 22 and 23 are explanatory views illustrating a coating removing method of a third embodiment, and are front views when an electric wire 10 is viewed in an axial direction. As illustrated in FIGS. 22 and 23, the electric wire 10 has a rectangular (quadrangular) cross section, and is specifically implemented as a flat wire. In the above embodiment, the electric wire 10 is set in a posture in which a surface 10a (side surface) is orthogonal to a traveling direction (a direction opposite to the Z direction) of laser light L. Therefore, in a case where the electric wire 10 is a flat wire having four surfaces 10a, the electric wire 10 needs to be set four times in different postures such that each of the four surfaces 10a is orthogonal to the direction opposite to the Z direction with respect to an optical head 120.

On the other hand, in the present embodiment, as illustrated in FIG. 22, a central axis Ax of the electric wire 10 is disposed at a position away from the optical head 120 in the direction opposite to the Z direction, two surfaces 10a1 and 10a2 adjacent to each other are inclined with respect to the Z direction, and the optical head 120 can irradiate the two surfaces 10a1 and 10a2 with the laser light L. In FIG. 22, the surfaces 10a1 and 10a2 are arranged in postures rotated by predetermined angles (angles different from each other) about the central axis Ax with respect to a plane orthogonal to the direction opposite to the Z direction (a plane parallel to an imaginary plane Vp). In this case, an insulation coating 12 to be removed is a region covering the surfaces 10a1 and 10a2 and angular portions 10b1 and 10b2 adjacent to the surfaces 10a1 and 10a2. The direction opposite to the Z direction is an example of a first direction.

As illustrated in FIG. 22, three angular portions 10b (ridge lines) adjacent to the two surfaces 10a1 and 10a2 include an angular portion 10b1 between the two surfaces 10a1 and 10a2 and two angular portions 10b2 separated from the angular portion 10b1. The angular portion 10b2 is positioned on a side opposite to the angular portion 10b1 with respect to the surfaces 10a1 and 10a2. The electric wire 10 is set such that positions z1 of the two angular portions 10b2 in the Z direction are substantially the same as each other, and a position zf of a focusing point of the laser light L is between a position z2 of the angular portion 10b1 in the Z direction and the position z1, for example, is a central position between the position z1 and the position z2.

After processing of removing the insulation coating 12 is performed on the surfaces 10a1 and 10a2 in a state S1 of FIG. 22, the electric wire 10 is rotated by 180° around the central axis Ax, and processing of removing the insulation coating 12 is performed on surfaces 10a3 and 10a4 in a state S2 of FIG. 23. In this case, as in FIG. 22, the three angular portions 10b (ridge lines) adjacent to the two surfaces 10a3 and 10a4 also include an angular portion 10b1 between the two surfaces 10a3 and 10a4 and two angular portions 10b2 separated from the angular portion 10b1. The angular portion 10b2 is positioned on a side opposite to the angular portion 10b1 with respect to the surfaces 10a3 and 10a4. In a posture of FIG. 23, the insulation coating 12 to be removed is a region covering the surfaces 10a3 and 10a4 and the angular portions 10b1 and 10b2 adjacent to the surfaces 10a3 and 10a4. The angular portion 10b2 is positioned on a side opposite to the angular portion 10b1 with respect to the surfaces 10a3 and 10a4. The electric wire 10 is set such that positions z1 of the two angular portions 10b2 in the Z direction are substantially the same as each other, and a position zf of a focusing point of the laser light L is between a position z2 of the angular portion 10b1 in the Z direction and the position z1, for example, is a central position between the position z1 and the position z2.

According to the present embodiment, it is sufficient if the electric wire 10 is set twice in the state S1 (FIG. 22) and the state S2 (FIG. 23) in which the postures are different from each other with respect to the optical head 120. Therefore, it is possible to obtain an advantage that a time and effort required for removing the coating can be reduced as the number of times of setting is reduced.

Here, the positions z1 and z2 are preferably set such that a distance from the position zf, which is a focal position of the laser light L in the traveling direction (in this case, a direction substantially opposite to the Z direction), is within a range of ±3 [mm] or less. In other words, the insulation coating 12 is preferably disposed in a range of ±3 [mm] or less in the traveling direction of the laser light L with respect to the focal position. This is because when the distance from the position zf as the focal position exceeds the distance, an effect of increasing power density is reduced.

As illustrated in FIG. 22, a minimum acute angle difference θ2 between a normal direction N2 of the surface 10a2 and the Z direction is larger than a minimum acute angle difference θ1 between a normal direction N1 of the surface 10a1 and the Z direction. In this case, since a thickness of the insulation coating 12 in the Z direction on the surface 10a2 is larger than a thickness of the insulation coating 12 in the Z direction on the surface 10a1, it may be difficult to remove the insulation coating 12 on the surface 10a2 when irradiation is performed with the laser light L under the same irradiation condition.

Therefore, the power density of the laser light L with which the surface 10a2 is irradiated on the imaginary plane Vp (hereinafter, the power density on the imaginary plane Vp is simply referred to as irradiation power density) may be made higher than an irradiation power density of the laser light with which the surface 10a1 is irradiated. A difference between the irradiation power density for the surface 10a1 and the irradiation power density for the surface 10a2 can be obtained, for example, by making power of the laser light L different, making a scanning pitch in the Y direction different, or making a scanning speed in the Y direction different. The irradiation power density increases as the power of the laser light L increases, the irradiation power density increases as the scanning pitch in the Y direction decreases, and the irradiation power density increases as the scanning speed in the Y direction decreases.

In FIG. 23, a minimum acute angle difference θ4 between a normal direction N4 of the surface 10a4 and the Z direction is larger than a minimum acute angle difference θ3 between a normal direction N3 of the surface 10a3 and the Z direction. In this case, an irradiation power density of the laser light L with which the surface 10a4 is irradiated may be made higher than an irradiation power density of the laser light with which the surface 10a3 is irradiated.

In addition, since a thickness of the insulation coating 12 in the Z direction on the angular portion 10b2 is larger than the thickness of the insulation coating 12 in the Z direction on the surfaces 10a1, 10a2, 10a3, and 10a4, it may be difficult to remove the insulation coating 12 at the angular portion 10b2 when the irradiation is performed with the laser light L under the same irradiation condition as those for the surfaces 10a1, 10a2, 10a3, and 10a4. Therefore, an irradiation power density of the laser light L with which the angular portion 10b2 is irradiated may be made higher than the irradiation power densities of the laser light L with which the surfaces 10a1, 10a2, 10a3, and 10a4 are irradiated. Note that an irradiation power density of the laser light L with which the angular portion 10b1 is irradiated may be lower than the irradiation power densities of the laser light L with which the surfaces 10a1, 10a2, 10a3, and 10a4 are irradiated.

### [Fourth Embodiment]

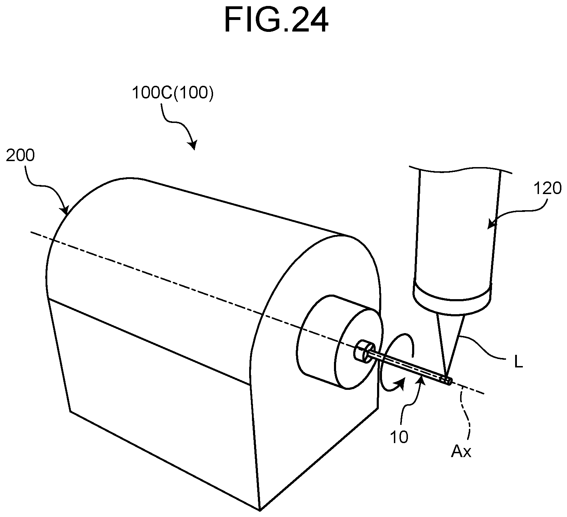

FIG. 24 is a perspective view of a part of a coating removing apparatus 100C (100) of a fourth embodiment. As illustrated in FIG. 24, in the present embodiment, laser light L is scanned on a surface 10a of an electric wire 10 by rotating the electric wire 10 about a central axis Ax extending in an axial direction by a rotation supporting device 200. By the rotation, a beam (spot) of the laser light L can be scanned in a width direction of the electric wire 10. Note that movement of the beam of the laser light L in the axial direction of the electric wire 10 can be implemented by movement of an optical head 120 by a drive mechanism 150 (see FIG. 2) and a change in an irradiation position of a laser scanner 126 (see FIG. 2) with respect to the electric wire 10. Alternatively, the movement of the beam of the laser light L in the axial direction of the electric wire 10 may be implemented by a mechanism that is provided in the rotation supporting device 200 and moves the electric wire 10 in the axial direction, a mechanism that moves the rotation supporting device 200 itself in the axial direction, or the like. Such moving mechanisms are examples of a scanning mechanism. The rotation supporting device 200 can also be referred to as a supporting device including a rotation mechanism.

With such a configuration, the same effects as those of the above embodiment can also be obtained. Furthermore, according to the present embodiment, the laser scanner 126 may be unnecessary in the optical head 120. In this case, the optical head 120 and the laser processing apparatus 100 can be configured more inexpensively and more compactly as compared with a case where the optical head 120 includes the laser scanner 126. In addition, the optical head 120 may include a so-called single-axis scannable laser scanner 126 that can reciprocate only in the axial direction. In this case, the optical head 120 and the laser processing apparatus 100 can be configured more inexpensively and more compactly as compared with a case where the optical head 120 includes a so-called two-axis scannable laser scanner 126.

### [Fifth Embodiment]

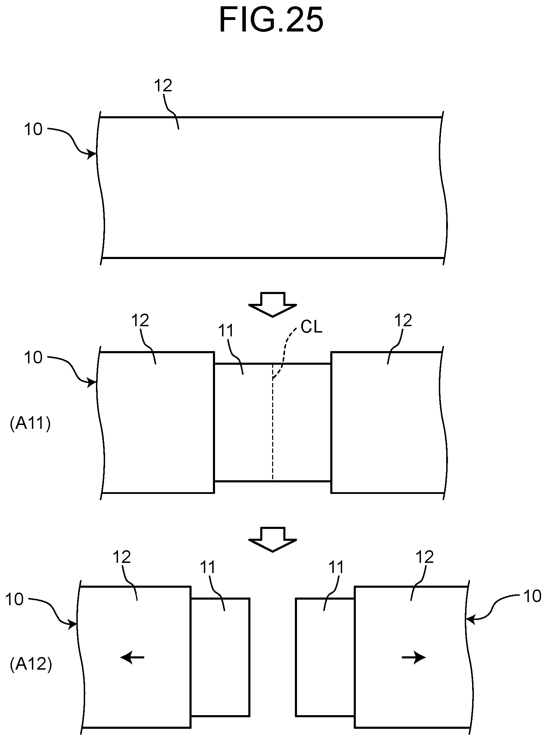

FIG. 25 is a plan view of an electric wire 10, illustrating an example of a procedure of a coating removing method of a fifth embodiment. In the present embodiment, first, an insulation coating 12 is removed over the entire circumference of a middle portion of the electric wire 10 in a longitudinal direction by the method of the above embodiment to expose a conductor 11 (A11). Thereafter, the electric wire 10 is separated in the longitudinal direction by cutting the conductor 11 along a cutting line CL of a middle portion of the exposed conductor 11 in the longitudinal direction (A12). Note that the cutting of the conductor 11 along the cutting line CL may be performed by irradiation with laser light L or may be performed by another means. According to such a method, it is possible to more efficiently and more quickly remove the insulation coating 12 at end portions of two electric wires 10.

### [Sixth Embodiment]

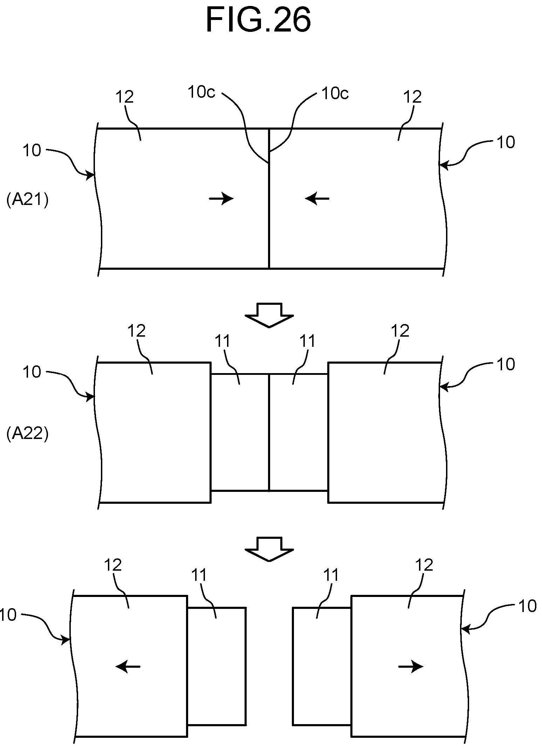

FIG. 26 is a plan view of an electric wire 10, illustrating an example of a procedure of a coating removing method of a sixth embodiment. In the present embodiment, first, end portions 10c of two electric wires 10 are brought into contact with each other, and the two electric wires 10 are arranged in a substantially straight line (A21). Thereafter, an insulation coating 12 is removed at a portion adjacent to the two end portions 10c by the method of the above embodiment (A22). According to such a method, it is possible to more efficiently and more quickly remove the insulation coating 12 at end portions of two electric wires 10.

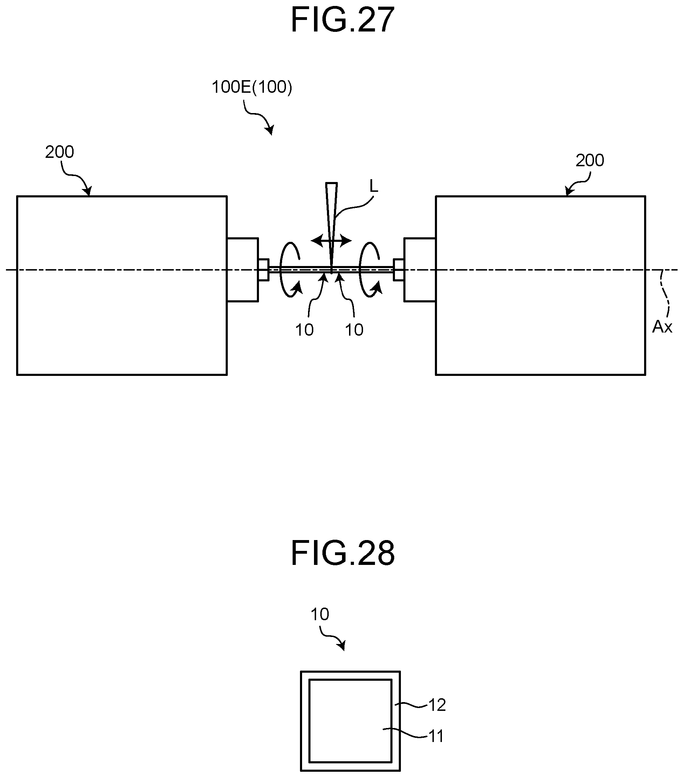

FIG. 27 is a side view of a laser processing apparatus 100E (100) that performs the coating removing method of the present embodiment. The laser processing apparatus 100E of the present embodiment includes two rotation supporting devices 200 that rotatably support the electric wires 10 about a central axis Ax and can rotate in synchronization with each other. The two rotation supporting devices 200 may have the same configuration as that of the fourth embodiment (see FIG. 24). In this case, a beam (spot) of the laser light L can be scanned in a width direction of the electric wire 10 by the rotation of the electric wire 10 about the central axis Ax. Note that the configuration of FIG. 27 is an example, and the scanning of the beam (spot) of the laser light L in the width direction of the electric wire 10 may be performed by a laser scanner 126.

### [Modified Examples of Electric Wire]

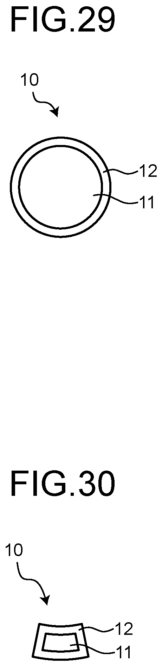

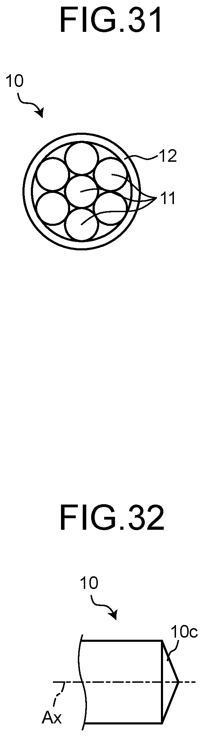

FIGS. 28 to 31 are front views illustrating modified examples of the electric wire 10 as a target from which the insulation coating 12 is to be removed in the above embodiment. The electric wire 10 may have a substantially square cross-sectional shape as illustrated in FIG. 28. Note that the insulation coating 12 in the above embodiment can be removed for various quadrangular electric wires 10 having different flatnesses. The electric wire 10 may have a substantially circular cross-sectional shape as illustrated in FIG. 29, or may have a substantially fan-shaped cross-sectional shape as illustrated in FIG. 30. Note that the cross-sectional shape of the electric wire 10 is not limited thereto, and may be various shapes. Further, the electric wire 10 may be a so-called stranded wire in which a plurality of conductors 11 are twisted as illustrated in FIG. 31. In addition, the electric wire 10 may be drawn out from a winding coil or may be separated independently.

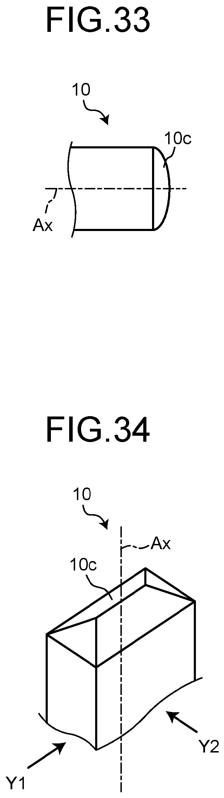

FIGS. 32 to 34 are views illustrating the vicinity of the end portion 10c of the electric wire 10 of other modified examples, in which FIGS. 32 and 33 are side views and FIG. 34 is a perspective view. As illustrated in FIGS. 32 to 34, the end portion 10c of the electric wire 10 may have a protruding shape in which a portion close to the central axis Ax protrudes in the X direction (the longitudinal direction and the axial direction) from a portion far from the central axis Ax. In the modified example of FIG. 32, the end portion 10c has a triangular protruding portion when viewed from the side, and in the modified example of FIG. 33, the end portion 10c has a dome-shaped protruding portion when viewed from the side. In the modified example of FIG. 34, the end portion 10c has a protruding portion having a triangular shape when viewed from the side in a Y1 direction and a trapezoidal shape when viewed from the side in a Y2 direction. With such a configuration, it is possible to suppress occurrence of a portion that becomes a shadow when the end portion 10c is irradiated with the laser light L and makes it difficult to remove the insulation coating 12. Note that the end portion 10c only needs to have a protruding shape protruding in the X direction, and the protruding shape is not limited to those illustrated in FIGS. 32 to 34 and can be variously deformed.

### [Cover for Supplying Oxygen Gas]

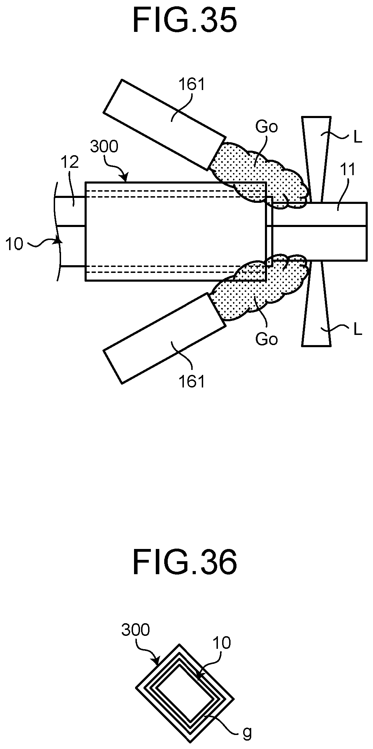

FIGS. 35 to 38 illustrates a modified example in which, in a case where the insulation coating 12 is removed while the oxygen gas Go is supplied, a region of the insulation coating 12 other than the removal region is covered with a cover 300. By covering the region of the insulation coating 12 other than the removal region with the cover 300, unnecessary spread of fire can be prevented, so that only a required removal region can be more reliably removed. In a case where the region is not covered with the cover 300, it may be difficult to increase the power density of the laser light L, for example, in consideration of unnecessary fire spread. In this regard, by covering the region with the cover 300 as in the present modification, it is not necessary to set conditions in consideration of fire spread, and thus the insulation coating 12 to be removed can be more efficiently and more quickly removed. Covering the region other than the removal region with the cover 300 is particularly effective in a case where the insulation coating 12 is made of a material that easily spreads fire, such as PEEK.

The cover 300 is preferably made of a material that is non-flammable and has relatively high thermal conductivity. Since the cover 300 is made of a material having relatively high thermal conductivity, it is possible to suppress an adverse effect caused by heat, such as thermal deformation, from occurring in the insulation coating 12. From such a viewpoint, the material of the cover 300 may be, for example, a metal material such as a copper-based material such as pure copper or a copper alloy, or an aluminum-based material such as pure aluminum or an aluminum alloy.

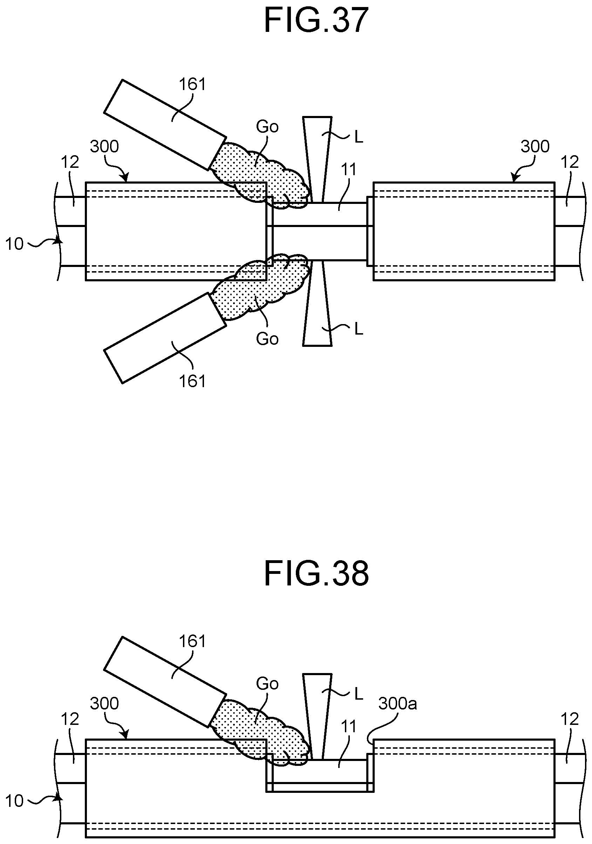

FIG. 35 illustrates a case where the insulation coating 12 is removed at the end portion of the electric wire 10 in the longitudinal direction. FIG. 36 is a front view of FIG. 35 when viewed in the axial direction. As illustrated in FIG. 36, a minute gap g is set between the cover 300 and the electric wire 10 (insulation coating 12). FIGS. 37 and 38 illustrate a case where the insulation coating 12 is removed at the middle portion of the electric wire 10 in the longitudinal direction. In this case, as illustrated in FIG. 37, two covers 300 covering both sides of the removal region in the longitudinal direction may be used, or the cover 300 having an opening portion 300a for exposing the removal region may be used.

The cover 300 may be installed in a device that holds the electric wire 10, such as the rotation supporting device 200. In this case, the electric wire 10 is inserted into the cover 300, the supply of the oxygen gas Go is started, and the insulation coating 12 is removed by irradiation with the laser light L in a state in which the oxygen gas Go is supplied. After the removal of the insulation coating 12 is completed, the supply of the oxygen gas Go is stopped, and the electric wire 10 is taken out of the cover 300. Thereafter, the next electric wire 10 is inserted into the cover 300, and the same processing is performed.

Although the embodiments and the modified examples of the present invention have been exemplified above, the above embodiments and modified examples are merely examples, and are not intended to limit the scope of the invention. The above embodiments and modified examples can be implemented in various other forms, and various omissions, substitutions, combinations, and changes can be made without departing from the gist of the invention. In addition, specifications (structures, types, directions, models, sizes, lengths, widths, thicknesses, heights, numbers, arrangements, positions, materials, and the like) of each configuration, shape, and the like can be appropriately changed and implemented.

For example, the laser device may multiplex and output beams of laser light output from a plurality of light sources having different wavelengths that are 400 nm or more and 550 nm or less. In this case, the laser device includes, for example, a diffraction grating inside, and a plurality of beams of laser light having different wavelengths and output from a plurality of light sources are combined and output in the diffraction grating. Such a configuration also enables output with a smaller beam diameter (spot diameter) and a higher power density. In addition, with such a configuration, for example, it is possible to obtain an effect that a wavelength range of the laser light wider than that in a case of the laser light having a single wavelength results in an increase in the light absorption rate even in a case where a resin material of the insulation coating is different, and easy achievement of a favorable removal state of the insulation coating, and an effect that the focal positions in the emission directions of the plurality of beams of laser light are different from each other due to a chromatic aberration of the lens of a condensing optical system included in the optical head, so that robustness of a distance between the optical head and an object to be processed can be improved.

Further, for example, a region from which the insulation coating is to be removed may be divided into a plurality of regions (divided regions), and the insulation coating may be removed for each divided region by the above-described methods or procedures. In this case, the method, the procedure, and each condition for removing the divided region may be the same or different.

Further, for example, by performing spot irradiation on different places a plurality of times, the insulation coating may be removed without scanning.

### Industrial Applicability

The present invention can be used in a coating removing method and a coating removing apparatus. Reference Signs List
10 ELECTRIC WIRE
10a, 10a1, 10a2, 10a3, 10a4 SURFACE (SIDE SURFACE)
10b, 10b1, 10b2 ANGULAR PORTION (RIDGE LINE)
10c END PORTION
11 CONDUCTOR (CORE WIRE)
11a SURFACE
11d DISCOLORED REGION
12 INSULATION COATING (COATING)
12r RESIDUE
12a END SURFACE
12b STEPPED SURFACE
100, 100A, 100C, 100E LASER PROCESSING APPARATUS (COATING REMOVING APPARATUS)
110 LASER DEVICE
110a HOUSING
110b LASER MODULE
110c LENS
120 OPTICAL HEAD
121 COLLIMATOR LENS
122 CONDENSER LENS
124 MIRROR
126 LASER SCANNER
130 OPTICAL FIBER
140 CONTROL DEVICE
150 DRIVE MECHANISM
160 OXYGEN SUPPLY MECHANISM
161 PIPE
161a DISCHARGE PORT
200 ROTATION SUPPORTING DEVICE
300 COVER
300a OPENING PORTION
a, ar MAXIMUM VALUE
A PREDETERMINED RANGE
A00, A01, A1 to A4 REGION
Ar 2
Ax CENTRAL AXIS
Bo BOUNDARY
C CORNER PORTION
Ct CENTER
CL CUTTING LINE
D DISTANCE
d, dr DIAMETER
Go OXYGEN GAS
Go_rd COMPONENT
Go_z COMPONENT
g GAP
P IRRADIATION POINT
Pr RESIDUAL PORTION
L LASER LIGHT
N1 to N4 NORMAL DIRECTION
RD REMOVAL DIRECTION (SECOND DIRECTION)
S SPOT
SD1, SD2 SCANNING DIRECTION
s1 to s4 SCANNING
Vp IMAGINARY PLANE
W WIDTH
X DIRECTION
Y DIRECTION
Yo OPPOSITE DIRECTION
Z DIRECTION (DIRECTION OPPOSITE TO FIRST DIRECTION)
z1, z2, zf POSITION
α OVERLAPPING RATIO
θ ANGLE
θ1 to θ4 MINIMUM ANGLE DIFFERENCE

## Claims

1. A coating removing method for removing an insulation coating of an electric wire including a core wire and the insulation coating made of an organic polymer material, the coating removing method comprising:
a step of installing the electric wire at a position where a surface of the electric wire is irradiated with laser light; and
a removing step of removing the coating by irradiating each place of a target region from which the coating is to be removed on the surface of the electric wire with the laser light having a wavelength of 300 nm or more and 600 nm or less a plurality of times.

2. The coating removing method according to claim 1, wherein the removing step includes:
a first step of irradiating the surface of the electric wire with the laser light to thin the coating; and
a second step of irradiating the coating thinned in the first step with the laser light to remove the coating.

3. The coating removing method according to claim 2,
wherein in the first step, a thickness of the coating is decreased to 1 µm or less.

4. The coating removing method according to claim 2,
wherein an energy amount of the laser light output in the first step is equal to or larger than an energy amount of the laser light output in the second step.

5. The coating removing method according to claim 2,
wherein a power density at a focal position of the laser light in the second step is higher than a power density at a focal position of the laser light in the first step.

6. The coating removing method according to any one of claims 2 to 5, wherein at least one of a power density at a focal position of the laser light, power of the laser light, a spot diameter of the laser light on the surface, a scanning speed in a case where a spot of the laser light is scanned on the surface, and a shift amount in a case where the spot of the laser light is scanned a plurality of times while being shifted in a direction intersecting a scanning direction on the surface is different between the first step and the second step.

7. The coating removing method according to claim 6,
wherein
in the first step, the coating is combusted by energy applied to the coating from the laser light, and
in the second step, the coating is combusted by energy applied to the core wire and the coating from the laser light.

8. The coating removing method according to claim 1,
wherein the removing step includes a plurality of steps of irradiating a specific region of the target region from which the coating is to be removed with a beam of the laser light while performing scanning.

9. The coating removing method according to claim 8,
wherein in the plurality of steps of irradiating the specific region with the beam of the laser light while performing the scanning, a scanning position is shifted in a direction intersecting a scanning direction.

10. The coating removing method according to claim 9,
wherein a shift amount of the scanning position is 1/3 or more and 1/2 or less of a width of an irradiation region in the scanning.

11. The coating removing method according to claim 8,
wherein
a plurality of times of scanning of the laser light are performed while shifting in a direction intersecting a scanning direction, and
irradiation regions of two consecutive times of scanning partially overlap each other in the direction intersecting the scanning direction.

12. The coating removing method according to claim 11,
wherein an overlapping ratio of widths of the irradiation regions of the two consecutive times of scanning is 1/4 or more.

13. The coating removing method according to claim 11,
wherein an overlapping ratio of widths of the irradiation regions of the two consecutive times of scanning is 5/6 or less.

14. The coating removing method according to claim 13,
wherein an overlapping ratio of widths of the irradiation regions of the two consecutive times of scanning is 1/4 or more and 5/6 or less.

15. The coating removing method according to claim 1,
wherein the removing step includes a step of irradiating the electric wire with a spot of the laser light while performing scanning in a state in which a power density at a focal position of the laser light is 230 kW/cm² or more.

16. The coating removing method according to claim 1,
wherein
the removing step includes a plurality of steps of irradiating a specific region of the target region from which the coating is to be removed with a beam of the laser light while performing scanning, and
in a last step of the plurality of steps, the electric wire is irradiated with a spot of the laser light while performing the scanning in a state in which a power density at a focal position of the laser light is 230 kW/cm² or more.

17. The coating removing method according to claim 1,
wherein a wavelength of the laser light is 400 nm or more and 550 nm or less.

18. The coating removing method according to claim 1,
wherein in the removing step, a power density at a focal position of the laser light is 350 kW/cm² or more.

19. The coating removing method according to claim 1,
wherein in the removing step, a diameter of a beam at a focal position of the laser light is 500 µm or less.

20. The coating removing method according to claim 19,
wherein in the removing step, the diameter of the beam at the focal position of the laser light is 200 µm or more.

21. The coating removing method according to claim 19 or 20, wherein the diameter of the beam at the focal position of the laser light is 300 µm or more and 400 µm or less.

22. The coating removing method according to claim 1,
wherein the laser light is a continuous wave laser.

23. The coating removing method according to claim 1,
wherein
the laser light is laser light output from one laser module, and
power of the one laser module is 400 W or more.

24. The coating removing method according to claim 23,
wherein the power of the one laser module is 1 kW or less.

25. The coating removing method according to claim 1,
wherein a spot of the laser light is scanned using a laser scanner.

26. The coating removing method according to claim 1,
wherein a spot of the laser light is scanned by rotating the electric wire around a central axis extending in an axial direction of the electric wire.

27. The coating removing method according to claim 1,
wherein a spot of the laser light is scanned using a laser scanner, and the spot of the laser light is scanned by rotating the electric wire around a central axis extending in an axial direction of the electric wire.

28. The coating removing method according to any one of claims 1 and 25 to 27, wherein
end portions of two electric wires, each of which is the electric wire, are brought into contact with each other to arrange the two electric wires in a substantially straight line, and
the coating is removed at a portion adjacent to the end portions of the two electric wires.

29. The coating removing method according to any one of claims 1 and 25 to 27, wherein
the coating is removed at a middle portion of the electric wire in a longitudinal direction, and
the electric wire is cut into two in the longitudinal direction at a middle position in a section from which the coating is removed in the longitudinal direction.

30. The coating removing method according to claim 1, wherein
the laser light is output from an optical head,
a central axis of the electric wire is disposed at a position away from the optical head in a first direction, and
the coating to be removed is disposed in a range of ±3 mm or less in the first direction with respect to a focal position of the laser light.

31. The coating removing method according to claim 1 or 30, wherein
the laser light is output from an optical head,
the electric wire has a plurality of side surfaces extending in a longitudinal direction and a plurality of ridge lines as angular portions extending in the longitudinal direction between two side surfaces adjacent to each other,
the coating is irradiated with the laser light in a posture in which one of the plurality of ridge lines and two side surfaces on both sides of the ridge line face the optical head, and
the coating forming the one ridge line, the two side surfaces, and a ridge line adjacent to each of the two side surfaces on a side opposite to the one ridge line is to be removed.

32. The coating removing method according to claim 31, wherein
a central axis of the electric wire is disposed at a position away from the optical head in a first direction,
each of the two side surfaces is arranged in a posture in which a plane orthogonal to the first direction is rotated by a predetermined angle about the central axis, and is arranged in a posture in which a minimum angular difference between a normal direction and a direction opposite to the first direction is different between the two side surfaces, and
the larger the minimum angle difference, the higher the power density of the laser light with which the side surface is irradiated on an imaginary plane orthogonal to the first direction.

33. The coating removing method according to claim 31, wherein
a central axis of the electric wire is disposed at a position away from the optical head in a first direction, and
a power density of the laser light applied to a ridge line adjacent to the side surface on a side opposite to the one ridge line on an imaginary plane orthogonal to the first direction is made higher than a power density of the laser light applied to the one ridge line and the two side surfaces on the imaginary plane.

34. The coating removing method according to claim 15,
wherein an end portion of the electric wire has a protruding shape protruding in a longitudinal direction of the electric wire.

35. The coating removing method according to claim 1,
wherein in the removing step, the coating is removed while supplying oxygen.

36. The coating removing method according to claim 1,
wherein the laser light includes laser light having a wavelength at which an absorption rate of the coating is 80 % or more.

37. The coating removing method according to claim 8,
wherein
in the removing step, a removal region of the coating expands in a second direction, and
oxygen is supplied in a direction including a component of the second direction.

38. The coating removing method according to claim 8,
wherein in the removing step, a scanning direction of the beam changes with time.

39. The coating removing method according to claim 8,
wherein in the removing step, the beam moves while turning back or spirally on the surface such that a removal region of the coating gradually expands in at least a partial section of the scanning of the beam.

40. The coating removing method according to claim 8,
wherein irradiation power of the laser light per unit area on the surface is changed while the coating is removed by scanning the beam.

41. The coating removing method according to claim 40,
wherein in the removing step, the irradiation power of the laser light per unit area on the surface is decreased while the coating is removed by scanning the beam.

42. The coating removing method according to claim 40,
wherein in the removing step, the irradiation power of the laser light per unit area on the surface is changed by changing at least one of a scanning speed of the laser light and an output of a light source of the laser light.

43. The coating removing method according to claim 8,
wherein in the removing step, the electric wire and the beam move relative to each other in an axial direction of the electric wire in at least a partial section of the scanning of the beam.

44. The coating removing method according to claim 8,
wherein in the removing step, the electric wire and the beam move relative to each other in a direction intersecting an axial direction of the electric wire in at least a partial section of the scanning of the beam.

45. The coating removing method according to claim 1,
wherein the core wire is made of a copper-based metal material.

46. The coating removing method according to claim 1,
wherein the electric wire is a flat wire or a round wire.

47. The coating removing method according to claim 8,
wherein in the removing step, the coating remains before final irradiation among the plurality of times of irradiation at each place.

48. The coating removing method according to claim 35,
wherein in the removing step, a region of the coating that is not removed is covered with a cover.

49. A coating removing apparatus comprising:
a laser device configured to output laser light; and
an optical head configured to irradiate a surface of an electric wire including a core wire and a coating made of an organic polymer material with the laser light output from the laser device, wherein
the coating is removed by irradiating each place of a region of the surface from which the coating is to be removed with the laser light a plurality of times.

50. The coating removing apparatus according to claim 49,
wherein
a wavelength of the laser light is 300 nm or more and 600 nm or less, and
a power density at a focal position of the laser light is 2.3 kW/mm² or more.

51. The coating removing apparatus according to claim 50, wherein
the laser light is laser light output from one laser module included in the laser device, and
power of the one laser module is 150 W or more.

52. The coating removing apparatus according to claim 51, further comprising
an optical fiber configured to propagate the laser light output from the laser module to the optical head, wherein
a core diameter of the optical fiber is 200 µm or less.

53. The coating removing apparatus according to claim 50, wherein the laser device multiplexes and outputs a plurality of beams of laser light having different wavelengths that are 300 nm or more and 600 nm or less.
